# EUROPEAN PATENT APPLICATION

(11) **EP 4 848 682 A1**
(43) Date of publication of application: **02.12.2026**
(21) Application number: 25744438.0
(22) Date of filing: 07.01.2025
(51) Int. Cl.: H04L 41/12

(54) **NETWORK ARCHITECTURE, NETWORK ARCHITECTURE GENERATION METHOD, AND RELATED DEVICE**

(30) Priority: 24.01.2024 CN 202410104640
(71) Applicant: HUAWEI TECHNOLOGIES CO., LTD., Shenzhen, Guangdong 518129 (CN)
(72) Inventor: GONG, Siru, Shenzhen, Guangdong 518129 (CN); LIU, Shaoteng, Shenzhen, Guangdong 518129 (CN); CHEN, Xiangyu, Shenzhen, Guangdong 518129 (CN); CHEN, Dingding, Shenzhen, Guangdong 518129 (CN)
(74) Representative: Huawei European IPR
(86) International application number: PCT/CN2025/070942
(87) International publication number: WO 2025/156994

(57) **Abstract**

This application discloses a network architecture, a method for generating a network architecture, and a related apparatus, and belongs to the field of communication technologies. The network architecture includes a plurality of compute nodes, the plurality of compute nodes are communicatively connected according to a Torus networking scheme, and a first compute node of the plurality of compute nodes is further communicatively connected to a target compute node. The first compute node is any one of the plurality of compute nodes. The target compute node is a compute node with a farthest communication distance from the first compute node when the plurality of compute nodes are communicatively connected according to the Torus networking scheme. Therefore, compared with a Torus network, the network architecture in this application not only increases a degree of each compute node and improves throughput and fault tolerance of the compute node, but also reduces communication latency between the compute nodes, thereby improving overall communication performance of a network.

## Description

This application claims priority to Chinese Patent Application No. 202410104640.0, filed on January 24, 2024 and entitled "NETWORK ARCHITECTURE, METHOD FOR GENERATING NETWORK ARCHITECTURE, AND RELATED APPARATUS", which is incorporated herein by reference in its entirety.

### TECHNICAL FIELD

This application relates to the field of communication technologies, and in particular, to a network architecture, a method for generating a network architecture, and a related apparatus.

### BACKGROUND

As a directly connected network architecture, a Torus network shortens a communication distance between compute nodes in the network by adding wrap-around links based on a mesh (Mesh) network, to improve communication performance.

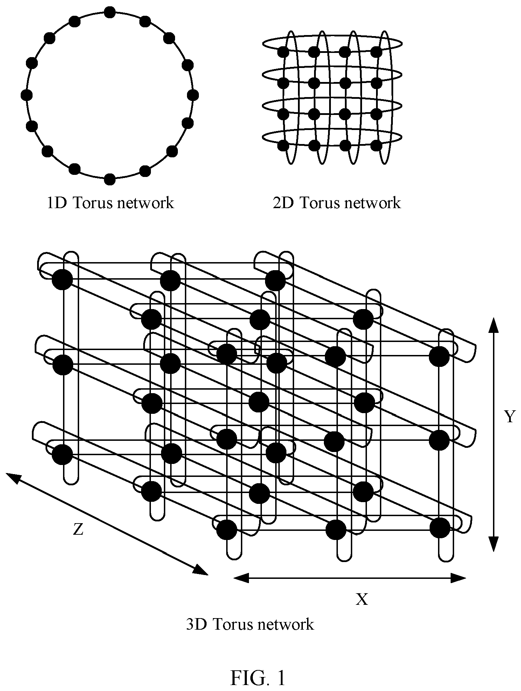

As shown in FIG. 1, a Torus network can be represented as an N-dimensional mesh, and communication connections between compute nodes in the Torus network are established by setting up direct connections between adjacent compute nodes in each dimension (dimension, D for short). For example, in a two-dimensional Torus (2D Torus for short) network, each compute node is connected to its four adjacent compute nodes in top, bottom, left, and right directions respectively. Because the Torus network is a network topology with node symmetry, a multi-node networking scheme of the Torus network can be uniquely determined as long as dimensions of the Torus network and a quantity of nodes in each dimension are determined.

However, as a network scale increases, communication performance of the Torus network is limited. Therefore, there is an urgent need for a new network architecture to further improve communication performance such as node communication latency and network bandwidth of the Torus network.

### SUMMARY

This application provides a network architecture, a method for generating a network architecture, and a related apparatus, which can greatly improve communication performance between compute nodes compared with a Torus network. The technical solutions are described below.

According to a first aspect, a network architecture is provided. The network architecture includes a plurality of compute nodes, the plurality of compute nodes are communicatively connected according to a Torus networking scheme, and a first compute node of the plurality of compute nodes is further communicatively connected to a target compute node. The first compute node is any one of the plurality of compute nodes. The target compute node is a compute node with a farthest communication distance from the first compute node when the plurality of compute nodes are communicatively connected according to the Torus networking scheme.

It can be learned that, after the plurality of compute nodes in the network architecture in this application are communicatively connected according to the Torus networking scheme, each compute node is further communicatively connected to at least one compute node with a farthest communication distance from the compute node under the Torus networking scheme. Therefore, compared with a Torus network, the network architecture described in this embodiment of this application not only increases a degree of each compute node and improves throughput and fault tolerance of the compute node, but also reduces communication latency between the compute nodes, thereby improving overall communication performance of a network.

In a possible implementation, the Torus networking scheme includes at least one dimension, and if a total quantity of compute nodes in each of the at least one dimension is an even number, the target compute node includes one compute node. A coordinate value of the compute node in a first dimension is a first coordinate value, and the first coordinate value is a value obtained by performing a modulo operation on (d₁ + k₁/2) with respect to k₁. The first dimension is any one of the at least one dimension, d₁ is a coordinate value of the first compute node in the first dimension, and k₁ is a total quantity of compute nodes in the first dimension.

In a possible implementation, the Torus networking scheme includes at least one dimension, and if there is a dimension in which a total quantity of compute nodes is an odd number among the at least one dimension, the target compute node includes at least two compute nodes. When a total quantity of compute nodes in a first dimension is an even number, coordinate values of the at least two compute nodes in the first dimension are each a first coordinate value, where the first coordinate value is a value obtained by performing a modulo operation on (d₁ + k₁/2) with respect to k₁. When a total quantity of compute nodes in a first dimension is an odd number, a coordinate value of a first part of the at least two compute nodes in the first dimension is a second coordinate value, a coordinate value of a second part of the at least two compute nodes in the first dimension is a third coordinate value, and a quantity of compute nodes in the first part is equal to that in the second part, where the second coordinate value is a value obtained by performing a modulo operation on (d₁ + (k₁ - 1)/2) with respect to k₁, and the third coordinate value is a value obtained by performing a modulo operation on (d₁ + (k₁ + 1)/2) with respect to k₁. The first dimension is any one of the at least one dimension, d₁ is a coordinate value of the first compute node in the first dimension, and k₁ is the total quantity of compute nodes in the first dimension.

In a possible implementation, if a total quantity of compute nodes in each of the at least one dimension is an odd number, the at least two compute nodes include a second compute node and a third compute node. A coordinate value of the second compute node in the first dimension is the second coordinate value, and a coordinate value of the second compute node in a second dimension is a fourth coordinate value, where the fourth coordinate value is a value obtained by performing a modulo operation on (d₂ + (k₂ - 1)/2) with respect to k₂. A coordinate value of the third compute node in the first dimension is the third coordinate value, and a coordinate value of the third compute node in the second dimension is a fifth coordinate value, where the fifth coordinate value is a value obtained by performing a modulo operation on (d₂ + (k₂ + 1)/2) with respect to k₂. The second dimension is any dimension among the at least one dimension other than the first dimension, d₂ is a coordinate value of the first compute node in the second dimension, and k₂ is a total quantity of compute nodes in the second dimension.

In a possible implementation, the network architecture further includes at least one network device, and the first compute node is communicatively connected to the target compute node through the at least one network device.

In a possible implementation, the first compute node is communicatively connected to the target compute node through a same network device.

In a possible implementation, the plurality of compute nodes are formed into a plurality of topologically identical Torus networks according to the Torus networking scheme, and compute nodes at same positions in respective ones of the plurality of Torus networks are connected to a same network device.

In conclusion, when the network architecture includes one network device, all compute nodes in the plurality of Torus networks are connected to a same network device, to ensure that all the compute nodes in the plurality of Torus networks are fully connected through the network device. When the network architecture includes a plurality of network devices, some compute nodes in each Torus network are connected to a same network device, to ensure that all compute nodes in the plurality of Torus networks are fully connected through the plurality of network devices. That is, when the network architecture includes at least one network device and a plurality of Torus networks formed by a plurality of compute nodes, the at least one network device may be used to implement a communication connection between compute nodes that are farthest apart in communication distance in each Torus network, to form a Diagonal Torus network, thereby reducing communication latency between the compute nodes in the network architecture.

According to a second aspect, a circuit is provided. The circuit includes a plurality of compute nodes, and the plurality of compute nodes form the network architecture according to the first aspect.

According to a third aspect, a cabinet is provided. The cabinet includes a plurality of compute nodes and at least one network device, and the plurality of compute nodes and the at least one network device form the network architecture according to the first aspect.

According to a fourth aspect, a computing cluster is provided. The computing cluster includes a plurality of cabinets, each of the cabinets includes a plurality of compute nodes and at least one network device, and the plurality of compute nodes and the at least one network device form the network architecture according to the first aspect.

According to a fifth aspect, a method for generating a network architecture is provided. The network architecture includes a plurality of compute nodes and at least one network device, and the plurality of compute nodes are formed into at least one topologically identical Torus network according to a Torus networking scheme. The method includes: receiving network resource configuration information, where the network resource configuration information includes a target topology type, the target topology type indicates a target network topology that is currently expected to be generated, and two compute nodes having a longest communication distance in the target network topology are communicatively connected through the at least one network device; determining, based on the target topology type, routing information between compute nodes that form the target network topology among the plurality of compute nodes; and sending the target topology type and the routing information to the compute nodes.

In a possible implementation, when the plurality of compute nodes are formed into a plurality of topologically identical Torus networks according to the Torus networking scheme, and the network architecture includes a plurality of network devices, compute nodes at same positions in respective ones of the plurality of Torus networks are connected to a same network device.

In a possible implementation, two compute nodes having a longest communication distance in a same Torus network are communicatively connected through a same network device, and the routing information includes a shortest route between the compute nodes.

In a possible implementation, before the determining, based on the target topology type, the routing information between the compute nodes that form the target network topology among the plurality of compute nodes, the method further includes: if the target topology type is a network topology type supported for generation by the network architecture, performing the step of determining, based on the target topology type, the routing information between the compute nodes that form the target network topology among the plurality of compute nodes.

In a possible implementation, the method further includes: determining, based on a connection relationship between the plurality of compute nodes and the at least one network device, the network topology type supported for generation by the network architecture.

It can be learned that, when the connection relationship between the plurality of compute nodes and the at least one network device in the network architecture supports generation of a plurality of network topology types, a manager determines, based on the target topology type included in the network resource configuration information, a communication route between the compute nodes that form the target network topology in the network architecture. In this way, based on a same network architecture, an application scenario of the network architecture is broadened by generating a target network topology, to meet requirements of different networking scales and requirements of different data processing tasks for a quantity of compute nodes. In addition, because the target network topology is a Diagonal Torus network constructed based on the networking scheme in this embodiment of this application, when the compute nodes communicate based on the target network topology and the routing information, communication latency during multi-node communication can be reduced.

According to a sixth aspect, a method for generating a network architecture is provided. The network architecture includes a plurality of compute nodes and at least one network device, and the plurality of compute nodes are formed into at least one topologically identical Torus network according to a Torus networking scheme. The method includes: receiving a target topology type and routing information, where the target topology type indicates a target network topology that is expected to be generated based on the network architecture, two compute nodes having a longest communication distance in the target network topology are communicatively connected through the at least one network device, and the routing information indicates a communication route between compute nodes that form the target network topology.

It can be learned that, after receiving the target topology type and the routing information, the compute node in the network architecture may store the target topology type and the routing information, so that when networking needs to be performed based on the target network topology and a compute task needs to be processed, the compute node may communicate with at least one compute node in the target network topology with reference to the routing information, to perform transmission of related data, information, or instructions.

According to a seventh aspect, an apparatus for generating a network architecture is provided. The apparatus for generating a network architecture has a function of implementing behavior of the method for generating a network architecture in the fifth aspect. The apparatus for generating a network architecture includes at least one module, and the at least one module is configured to implement the method for generating a network architecture provided in the fifth aspect.

According to an eighth aspect, an apparatus for generating a network architecture is provided. The apparatus for generating a network architecture has a function of implementing behavior of the method for generating a network architecture in the sixth aspect. The apparatus for generating a network architecture includes at least one module, and the at least one module is configured to implement the method for generating a network architecture provided in the sixth aspect.

According to a ninth aspect, an electronic device is provided. The electronic device includes a processor and a memory. The memory is configured to store a computer program for performing the method for generating a network architecture provided in the fifth aspect or the sixth aspect. The processor is configured to execute the computer program stored in the memory, to implement the method for generating a network architecture according to the fifth aspect or the sixth aspect.

In a possible implementation, the electronic device may further include a communication bus, and the communication bus is configured to establish a connection between the processor and the memory.

According to a tenth aspect, a computer-readable storage medium is provided. The storage medium stores instructions, and when the instructions are run on a computer, the computer is caused to perform the method for generating a network architecture according to the fifth aspect or the sixth aspect.

According to an eleventh aspect, a computer program product including instructions is provided. When the instructions are run on a computer, the computer is caused to perform the method for generating a network architecture according to the fifth aspect or the sixth aspect. Alternatively, a computer program is provided. When the computer program is run on a computer, the computer is caused to perform the method for generating a network architecture according to the fifth aspect or the sixth aspect.

Technical effects obtained in the second aspect, the third aspect, and the fourth aspect are similar to technical effects obtained by using corresponding technical means in the first aspect, and details are not described herein again. Similarly, technical effects obtained in the seventh aspect to the eleventh aspect are similar to technical effects obtained by using corresponding technical means in the fifth aspect and the sixth aspect, and details are not described herein again.

### BRIEF DESCRIPTION OF DRAWINGS

FIG. 1 is a diagram of a network architecture of a Torus network according to an embodiment of this application;
FIG. 2 is a diagram of a network architecture of a Tofu network according to an embodiment of this application;
FIG. 3 is a diagram of a network architecture of a Twisted Torus network according to an embodiment of this application;
FIG. 4 is a diagram of a network architecture of a Diagonal 1D Torus network according to an embodiment of this application;
FIG. 5 is a diagram of a network architecture of a Diagonal 2D Torus network according to an embodiment of this application;
FIG. 6 is a diagram of a network architecture of a Diagonal 3D Torus network according to an embodiment of this application;
FIG. 7 is a diagram of a network architecture of another Diagonal 1D Torus network according to an embodiment of this application;
FIG. 8 is a diagram of a network architecture of another Diagonal 2D Torus network according to an embodiment of this application;
FIG. 9 is a diagram of a connection manner of compute nodes in a Diagonal 2D Torus network according to an embodiment of this application;
FIG. 10 is a diagram of a connection manner for multi-node networking according to an embodiment of this application;
FIG. 11 is a diagram of another connection manner for multi-node networking according to an embodiment of this application;
FIG. 12 is a diagram of still another connection manner for multi-node networking according to an embodiment of this application;
FIG. 13 is a diagram of a structure of a computer device according to an embodiment of this application;
FIG. 14 is a schematic flowchart of a method for generating a network architecture according to an embodiment of this application; and
FIG. 15 is a diagram of a structure of an apparatus for generating a network architecture according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, before the network architecture provided in embodiments of this application is described in detail, terms and an application background related to embodiments of this application are first described.

First, the terms in embodiments of this application are described.

### 1. Torus network

A Torus network is a directly connected network topology architecture. Based on a mesh (Mesh) network, Torus shortens a communication distance between compute nodes in the network by adding wraparound links, to improve communication performance.

A quantity of compute nodes in each dimension (dimension, D for short) in the Torus network is referred to as a radix of the Torus network. For example, if there are M compute nodes in each of X and Y dimensions in the Torus network, the radix of the Torus network is M, where M is an integer greater than 1.

### 2. Vertex-symmetric graph (also referred to as vertex-transitive graph)

Each vertex in the vertex-transitive graph has an identical local interconnection environment. Based on this, when an overall architecture of a network satisfies the vertex-transitive graph, each compute node in the network also has an identical local interconnection environment. Therefore, communication routing between compute nodes can be easily designed.

### 3. Cayley graph (Cayley graph)

The Cayley graph is also a type of vertex-transitive graph. A Torus network architecture is a Cayley graph.

### 4. All-to-all

All-to-all is a many-to-many collective communication pattern that frequently appears in artificial intelligence (artificial intelligent, AI) training. In an all-to-all operation, data of each compute node is scattered to all compute nodes in a cluster, while each compute node gathers data from all compute nodes in the cluster. In other words, all-to-all is an all-to-all exchange operation that enables each compute node to obtain values of other compute nodes.

A specific operation of all-to-all is that a j^{th} data block of a compute node i is sent to a compute node j, and the compute node j places the data block received from the compute node i at an i^{th} block of the compute node j.

### 5. All-reduce

All-reduce is a many-to-many collective communication pattern that frequently appears in AI training. All-reduce is a collective term for a series of simple arithmetic operations, where a same reduce operation is applied across all compute nodes.

An all-reduce sum operation is used as an example. After the all-reduce sum operation is completed, each compute node has a sum of data from all compute nodes.

### 6. Distance

A minimum quantity of hops required for communication between two compute nodes in a network is a distance between the two compute nodes.

### 7. Diameter

The diameter is a maximum distance between any two compute nodes in a network. A larger diameter of a network indicates higher communication latency of the network.

### 8. Average distance

The average distance is an average value of distances of all pairs of compute nodes in a network, where each pair of compute nodes includes any two compute nodes in the network. A larger average distance of a network indicates higher overall communication latency of the network.

### 9. Bisection bandwidth

The bisection bandwidth is communication bandwidth between two equal parts obtained by bisecting a network. Larger bisection bandwidth indicates a stronger communication capability of a network.

### 10. Degree

In complex networks, a degree is used to measure a quantity of edges connected to a compute node, in other words, a quantity of edges connected to a compute node is defined as a degree of the compute node. For example, if a compute node is connected to three edges, a degree of the compute node is 3.

### 11. A mod B

A mod B is a value obtained by performing a modulo operation on a number A with respect to a number B, namely, which is used to calculate a remainder of A divided by B. For example, 5 mod 4 = 1.

Second, the application background of embodiments of this application is described.

In a process of forming large-scale networks, a Clos architecture is usually used to connect a plurality of nodes/devices for networking. However, as a high-performance and scalable non-directly connected network architecture, the Clos architecture has high networking costs and struggles to accommodate rapidly growing network scales. Different from the Clos architecture, a Torus network is a directly connected network topology architecture, where wrap-around links are added to a mesh (Mesh) network to improve communication performance of the network. Due to low networking costs/power consumption, the Torus network has been applied to various large-scale networks.

Refer to FIG. 1. A Torus network can be represented as an N-dimensional mesh, and communication connections between compute nodes in the Torus network are established by setting up direct connection between adjacent compute nodes in each dimension. For example, in a 1D Torus network, each compute node is connected to its two adjacent compute nodes; in a 2D Torus network, each compute node is connected to its four adjacent compute nodes in top, bottom, left, and right directions respectively; and in a 2D Torus network, each compute node is connected to its six adjacent compute nodes in front, back, left, right, top and bottom directions. An overall architecture of the Torus network is a Cayley graph, and is a type of vertex-transitive network topology. Therefore, once dimensions of the Torus network and a quantity of nodes in each dimension are determined, a networking scheme for forming the Torus network with a plurality of compute nodes can be uniquely determined.

However, as network scales increase, the Torus network has disadvantages such as large network diameter, high communication latency, and degraded all-to-all bandwidth, and consequently, overall communication performance of the Torus network is limited.

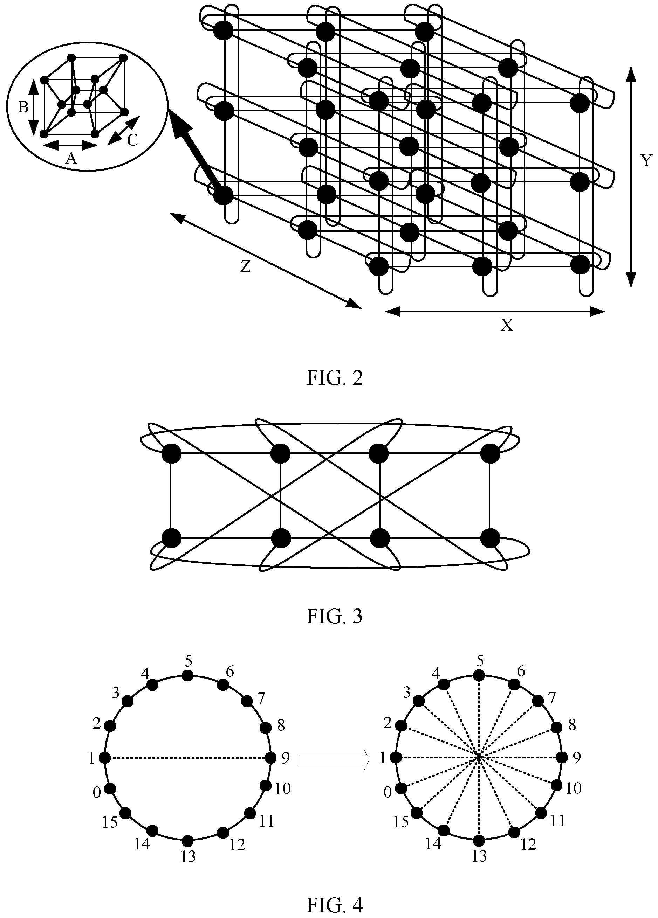

Refer to FIG. 2. A 6D Torus network based on torus fusion (also referred to as a Torus Fusion network, a Tofu network for short) uses a 3D structure including 12 compute nodes as a compute node in a 3D Torus network, to form an overall 6D network. Each compute node in the Tofu network is described by using six coordinate systems, and coordinates of each compute node may be denoted as (X, Y, Z, A, B, C). Coordinate values of a compute node on the A coordinate axis and the C coordinate axis are 0 or 1, and a coordinate value of the compute node on the B coordinate axis is 0, 1, or 2. Value ranges of coordinate values of the compute node on the X coordinate axis, the Y coordinate axis, and the Z coordinate axis depend on an overall scale of the Tofu network.

In the Tofu network, as shown in FIG. 2, each compute node is connected to four compute nodes in a corresponding 3D structure, and is connected to six compute nodes in a 3D Torus network architecture. Therefore, a degree of each compute node in the Tofu network is 10, which greatly improves throughput and fault tolerance of the Torus network while maintaining low networking costs. However, at a 10,000-card scale, far-node/collective communication performance of the Tofu network is still limited, with communication latency still reaching 20+ hops, which results in poor all-to-all communication performance.

It should be noted that, although the Tofu network is also referred to as a 6D Torus, the Tofu network is essentially formed by placing a 3D structure at a compute node position of a 3D Torus. Therefore, the Tofu network is inherently not the Torus network, and does not have point symmetry, which results in complex configuration of communication routing between the compute nodes in the network.

Refer to FIG. 3. A Torus network based on twisted wrap-around links (also referred to as a Twisted Torus network) is formed based on an irregular (rectangular) Torus network, with wrap-around links on short sides twisted, thereby improving bisection bandwidth of the entire network while inheriting an advantage of low networking costs of the Torus network. A degree of each compute node in the Twisted Torus network is the same as that in the Torus network.

It should be noted that, because the Twisted Torus network is an improved solution for the irregular Torus network, during multi-node networking, a networking scheme of the Twisted Torus network can be used to connect compute nodes only when a quantity of compute nodes in a dimension is twice that in another dimension.

That is, the Twisted Torus network has effect of improving bisection bandwidth only for the irregular Torus network. However, irregularity of the network architecture results in complex configuration of communication routing between the compute nodes in the entire network.

It can be learned that, in the foregoing improved solution based on the Torus network, although the throughput, fault tolerance, and bisection bandwidth of the network are improved, and the advantage of low networking costs of the Torus network is inherited, the network architecture of the improved solution does not have point symmetry, which results in complex configuration of communication routing between the compute nodes in the network. In addition, the foregoing improved solution still has a problem of high network communication latency in large-scale node networking, that is, does not overcome a defect that communication performance of the Torus network is limited as a network scale increases.

Based on this, an embodiment of this application provides a network architecture in which based on a Torus network, after a communicative connection is implemented according to a Torus networking scheme, any compute node in the network is additionally connected to at least one compute node with a farthest communication distance from the compute node in a diagonal direction. In this way, in the network architecture provided in this application, a compute node with a farthest in communication distance is additionally connected based on the Torus network, to reduce communication latency of the network and improve communication bandwidth. In addition, the network architecture has point symmetry, making configuration of routing between compute nodes in the network simple.

It should be understood that the network architecture provided in this embodiment of this application may be an intra-ACK interconnection mode or a cluster interconnection mode, to implement multi-node networking. The network architecture may be applied to but is not limited to small-scale general-purpose networks, or a plurality of service scenarios such as large-scale high performance computing (high performance computing, HPC), artificial intelligence training, and artificial intelligence inference. Certainly, with emergence of new multi-node networking schemes and network architectures, the technical concept of additionally connecting the compute node with the farthest communication distance in the network, as provided in this embodiment of this application, is also applicable to similar technical problems.

The following describes in detail the network architecture provided in this embodiment of this application.

An embodiment of this application provides a network architecture. The network architecture includes a plurality of compute nodes, the plurality of compute nodes are communicatively connected according to a Torus networking scheme, and a first compute node of the plurality of compute nodes is further communicatively connected to a target compute node. The first compute node is any one of the plurality of compute nodes, and the target compute node is a compute node with a farthest communication distance from the first compute node when the plurality of compute nodes are communicatively connected according to the Torus networking scheme.

It should be noted that, when the network architecture provided in this embodiment of this application is implemented, first compute nodes may be all compute nodes in the network architecture, or may be some compute nodes in the network architecture. A quantity of the first compute nodes is not limited in embodiments of this application.

In an example, it is assumed that a communication distance between a compute node and an adjacent compute node is one hop. In this case, under the Torus networking scheme, a hop count (or a quantity of compute nodes) that the first compute node traverses to reach the target compute node is the maximum. For example, when the plurality of compute nodes are communicatively connected according to the Torus networking scheme, if in a Torus network, the first compute node needs to traverse five hops (five compute nodes) to communicate with a second compute node, and traverse fewer than five hops to communicate with any other compute node, the second compute node is the compute node with the farthest communication distance from the first compute node. In this case, the second compute node is the target compute node that needs to be additionally connected to the first compute node.

It should be understood that, the compute node with the farthest communication distance from the first compute node may be determined in another manner, not limited to the manner in the foregoing example. This embodiment of this application imposes no limitation on this, and is intended to indicate that communication latency is high when a communication distance between the first compute node and the target compute node is the farthest. The solution provided in this embodiment of this application is intended to improve the problem of high communication latency.

To distinguish from the Torus network and facilitate description, in this embodiment of this application, a network architecture of the Torus network is improved using the technical concept of this embodiment of this application, to form a plurality of compute nodes into a diagonal-based Torus network, which is briefly referred to as a Diagonal Torus network. In other words, a network obtained by connecting a plurality of compute nodes for networking based on the network architecture described in this embodiment of this application may be referred to as a Diagonal Torus network.

In a possible implementation, in a process of forming a plurality of compute nodes into a Diagonal Torus network, the plurality of compute nodes may be communicatively connected according to the Torus networking scheme, to obtain a Torus network. Based on the Torus network, each compute node is additionally communicatively connected to a target compute node with a farthest communication distance from the compute node in the Torus network, to obtain the Diagonal Torus network.

The Torus networking scheme includes at least one dimension, and a position of a compute node in the network architecture may be represented by a coordinate value of the compute node. When the Torus networking scheme includes one dimension, a coordinate of each compute node in the network architecture is a coordinate value in the dimension. When the Torus networking scheme includes a plurality of dimensions, coordinates of each compute node in the network architecture include a coordinate value of the compute node in each dimension.

In an example, a coordinate of a compute node in a 1D network is a value; coordinates of a compute node in a 2D network are (x, y), including coordinate values in an x dimension and a y dimension; coordinates of a compute node in a 3D network are (x, y, z), including coordinate values in an x dimension, a y dimension, and a z dimension; and so on. Examples are not described one by one herein.

It should be noted that, after a plurality of compute nodes are communicatively connected in at least one dimension according to the Torus networking scheme, during determining of a target compute node to which a first compute node is to be communicatively connected, manners of determining the target compute node for the same first compute node are slightly different depending on whether a total quantity of compute nodes in each of the at least one dimension is an even number, or there is a dimension in which a total quantity of compute nodes is an odd number among the at least one dimension. The manners are separately described below.

**In a first manner of determining a target compute node**, a plurality of compute nodes are communicatively connected according to the Torus networking scheme, and the Torus networking scheme includes at least one dimension. If a total quantity of compute nodes in each of the at least one dimension is an even number, for a first compute node of the plurality of compute nodes, a target compute node with a farthest communication distance from the first compute node includes one compute node, where a coordinate value of the compute node in a first dimension is a first coordinate value, and the first coordinate value is a value obtained by performing a modulo operation on (d₁ + k₁/2) with respect to k₁.

The first dimension is any one of the at least one dimension, d₁ is a coordinate value of the first compute node in the first dimension, and k₁ is a total quantity of compute nodes in the first dimension.

That is, if a total quantity of compute nodes in each dimension of the Diagonal Torus network is an even number, when being communicatively connected to at least two compute nodes according to the Torus networking scheme, a first compute node in the Diagonal Torus network is further communicatively connected to a target compute node with a farthest communication distance from the first compute node.

Common Torus networks include the 1D Torus network, the 2D Torus network, and the 3D Torus network shown in FIG. 1. Therefore, after network architectures of the several Torus networks are improved in this embodiment of this application, a Diagonal 1D Torus network, a Diagonal 2D Torus network, and a Diagonal 3D Torus network are correspondingly obtained. Next, the Diagonal 1D Torus network, the Diagonal 2D Torus network, and the Diagonal 3D Torus network are used as examples to describe a process of communicatively connecting the first compute node to the target compute node in the Diagonal Torus network when a total quantity of compute nodes in each of at least one dimension is an even number.
**(1) A plurality of compute nodes form a Diagonal 1D Torus network, and a total quantity of compute nodes is an even number.**

When a total quantity of compute nodes is k, and k is an even number, a set of the k compute nodes in a 1D network may be denoted as {0, 1, ..., k - 1}, and each compute node in a 1D Torus network is communicatively connected to two compute nodes.

Based on this, when the k compute nodes are communicatively connected according to a 1D Torus networking scheme, a first compute node with a coordinate value of d is communicatively connected to a compute node with a coordinate value of (d + 1) mod k and a compute node with a coordinate value of (d + k - 1) mod k. Based on the 1D Torus network, when a Diagonal 1D Torus network is formed in this embodiment of this application, the first compute node with a coordinate value of d is further communicatively connected to a target compute node with a coordinate value of (d + k/2) mod k.

In other words, if a total quantity of a plurality of compute nodes included in a network architecture is an even number, in the Diagonal 1D Torus network formed in this embodiment of this application, each compute node is communicatively connected to three compute nodes.

In an example, refer to FIG. 4. It is assumed that a total quantity of a plurality of compute nodes included in a network architecture is k = 16, and a coordinate value of a first compute node is d = 1. Based on the foregoing coordinate value calculation manner, the first compute node is communicatively connected to a compute node with a coordinate value of 0 and a compute node with a coordinate value of 2 according to the 1D Torus networking scheme. Additionally, the first compute node is communicatively connected to a target compute node with a coordinate value of 9. The rest is deduced by analogy. When the 16 compute nodes are communicatively connected according to the 1D Torus networking scheme, each compute node is further communicatively connected to a compute node with a coordinate value of (d + k/2) mod k, to form a Diagonal 1D Torus network.

It should be noted that both the 1D networks in FIG. 1 and FIG. 4 are described by using an example in which a network architecture includes 16 compute nodes, that is, k = 16. However, in actual application, the network architecture may alternatively include more or fewer compute nodes, which is not limited in embodiments of this application. In addition, an example in which the 16 compute nodes are numbered from 0 to 15 is used in this embodiment of this application. In actual application, the compute nodes may alternatively be numbered in another manner. A manner of setting a coordinate value of a compute node is not limited in embodiments of this application without affecting a multi-node networking scheme and a network architecture.

For ease of comparison and description, in this embodiment of this application, it is assumed that bandwidth of a single link between two compute nodes is 1. Based on calculation and analysis, in a 1D Torus network formed by 16 compute nodes, a diameter of the network is 8, an average distance is 4.3, bisection bandwidth is 2, all-reduce bandwidth is 2, all-to-all bandwidth is 0.5, and a degree of the compute node is 2. In a Diagonal 1D Torus network formed by 16 compute nodes, a diameter of the network is 4, an average distance is 2.6, bisection bandwidth is 4, all-reduce bandwidth is 3, all-to-all bandwidth is 1, and a degree of the compute node is 3.

The degree of the compute node is equivalent to a quantity of communication links of the compute node in the foregoing 1D network. A larger quantity of communication links of the compute node indicates better throughput performance and fault tolerance performance of the compute node. The diameter and the average distance can reflect a communication latency status of the 1D network. A smaller diameter and average distance indicate lower communication latency between the compute nodes. The bisection bandwidth, the all-reduce bandwidth, and the all-to-all bandwidth can reflect data transmission performance between the compute nodes in the 1D network. Larger bisection bandwidth, all-reduce bandwidth, and all-to-all bandwidth indicate higher communication performance between the compute nodes.

As a network scale increases, each of network parameters of the Diagonal 1D Torus network and the 1D Torus network that are obtained by performing multi-node networking based on the network architecture described in this embodiment of this application approaches a constant value. The following Table 1 provides an example calculation manner for the network parameters of the 1D Torus network and the Diagonal 1D Torus network, along with a comparison of results of the network parameters.

**Table 1**

| k compute nodes, where k is an even number | 1D Torus network | Diagonal 1D Torus network | Comparison |
|---|---|---|---|
| Degree | 2 | 3 | The degree is increased by 1/2 |
| Diameter | k/2 | k/4 | The diameter is halved |
| Average distance | k/4 | k/8 | The average distance is halved |
| Bisection bandwidth | 2 | 4 | The bisection bandwidth is doubled |
| All-reduce bandwidth | 2 | 3 | The all-reduce bandwidth is increased by 1/2 |
| All-to-all bandwidth | 8/k | 16/k | The all-to-all bandwidth is doubled |

It can be learned from Table 1 that, as the network scale increases and a total quantity of compute nodes in the network architecture increases, communication performance of the Diagonal 1D Torus network is greatly improved compared with that of the 1D Torus network. In addition, it can be learned from a network structure of the Diagonal 1D Torus network shown in FIG. 4 that, similar to the 1D Torus network, the Diagonal 1D Torus network also has point symmetry. The network architecture of the Diagonal 1D Torus network is easy to implement in engineering, and communication routing between the compute nodes is simple, making overall routing algorithm configuration of the network easy.

In conclusion, compared with the 1D Torus network, the Diagonal 1D Torus network obtained by performing multi-node networking based on the network architecture provided in this embodiment of this application not only increases communication bandwidth (including the all-to-all bandwidth, the all-reduce bandwidth, and the bisection bandwidth) between the compute nodes, but also reduces communication latency (including maximum communication latency and average communication latency) between the compute nodes, thereby improving overall communication performance of the network.

**(2) A plurality of compute nodes form a k×k Diagonal 2D Torus network, and k is an even number.**

When a total quantity of compute nodes is k×k, and k is an even number, a set of the k×k compute nodes in a 2D network may be denoted as {(x, y) | 0 ≤ x ≤ k - 1, 0 ≤ y ≤ k - 1}, and each compute node in a 2D Torus network is communicatively connected to four compute nodes.

Based on this, when the k×k compute nodes are communicatively connected according to a 2D Torus networking scheme, a first compute node with coordinate values of (x, y) is communicatively connected to a compute node with coordinate values of ((x + 1) mod k, y), a compute node with coordinate values of (x, (y + 1) mod k), a compute node with coordinate values of ((x + k - 1) mod k, y), and a compute node with coordinate values of (x, (y + k - 1) mod k). Based on the 2D Torus network, when a Diagonal 2D Torus network is formed in this embodiment of this application, the first compute node with coordinate values of (x, y) is further communicatively connected to a target compute node with coordinate values of ((x + k/2) mod k, (y + k/2) mod k).

In other words, if a total quantity of a plurality of compute nodes included in a network architecture is an even number, in the Diagonal 2D Torus network formed in this embodiment of this application, each compute node is communicatively connected to five compute nodes.

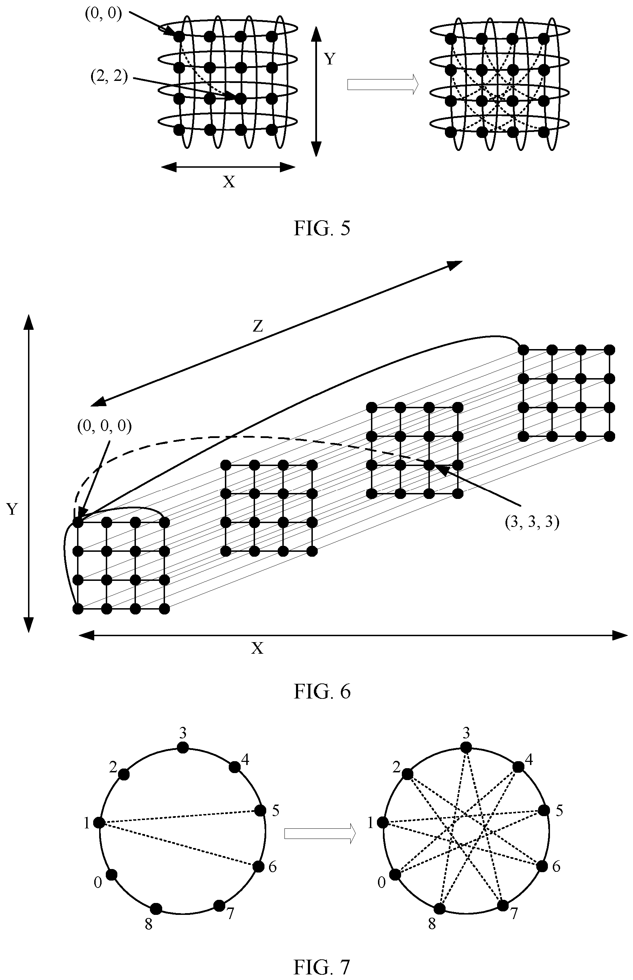

In an example, refer to FIG. 5. It is assumed that a total quantity of a plurality of compute nodes included in a network architecture is 16, and the compute nodes are used to form a 4×4 2D Torus network or a 4×4 Diagonal 2D Torus network. In addition, it is assumed that a horizontal direction is an X-axis, a vertical direction is a Y-axis, and coordinate values of a first compute node are (0, 0). In this case, the first compute node is communicatively connected to a compute node with coordinate values of (1, 0), a compute node with coordinate values of (0, 1), a compute node with coordinate values of (0, 3), and a compute node with coordinate values of (3, 0) according to the 2D Torus networking scheme. Additionally, the first compute node is communicatively connected to a target compute node with coordinate values of (2, 2). The rest is deduced by analogy. After the 16 compute nodes are communicatively connected according to the 2D Torus networking scheme, each compute node is further communicatively connected to a compute node with coordinate values of ((x + k/2) mod k, (y + k/2) mod k), to form a Diagonal 2D Torus network.

It should be noted that both the 2D networks in FIG. 1 and FIG. 5 are described by using an example in which a network architecture includes 16 compute nodes and a total quantity of compute nodes in each of two dimensions is 4 (namely, k = 4). However, in actual application, the network architecture may alternatively include more or fewer compute nodes, and for the plurality of compute nodes, quantities of nodes in two dimensions may alternatively be different, which is not limited in embodiments of this application. In addition, for the 16 compute nodes, an example in which a value range in each of two dimensions is [0, 3] is used in this embodiment of this application. In actual application, coordinate values of a compute node may alternatively be determined in another manner. A manner of setting coordinate values of a compute node is not limited in embodiments of this application without affecting a multi-node networking scheme and a network architecture.

For ease of comparison and description, in this embodiment of this application, it is assumed that bandwidth of a single link between two compute nodes is 1. Based on calculation and analysis, in a 4×4 2D Torus network formed by 16 compute nodes, a diameter of the network is 4, an average distance is 2.13, bisection bandwidth is 8, all-reduce bandwidth is 4, all-to-all bandwidth is 2, and a degree of the compute node is 4. In a 4×4 Diagonal 2D Torus network formed by 16 compute nodes, a diameter of the network is 2, an average distance is 1.67, bisection bandwidth is 16, all-reduce bandwidth is 5, all-to-all bandwidth is 3, and a degree of the compute node is 5.

Similarly, the degree of the compute node is equivalent to a quantity of communication links of the compute node in the foregoing 2D network. A larger quantity of communication links of the compute node indicates better throughput performance and fault tolerance performance of the compute node. The diameter and the average distance can reflect a communication latency status of the 2D network. A smaller diameter and average distance indicate lower communication latency between the compute nodes. The bisection bandwidth, the all-reduce bandwidth, and the all-to-all bandwidth can reflect data transmission performance between the compute nodes in the 2D network. Larger bisection bandwidth, all-reduce bandwidth, and all-to-all bandwidth indicate higher communication performance between the compute nodes.

As a network scale increases, each of network parameters of the Diagonal 2D Torus network and the 2D Torus network that are obtained by performing multi-node networking based on the network architecture described in this embodiment of this application approaches a constant value. The following Table 2 provides an example calculation manner for the network parameters of the 2D Torus network and the Diagonal 2D Torus network, along with a comparison of results of the network parameters.

**Table 2**

| k×k compute nodes, where k is an even number | 2D Torus network | Diagonal 2D Torus network | Comparison |
|---|---|---|---|
| Degree | 4 | 3 | The degree is increased by 1/4 |
| Diameter | k | k/2 | The diameter is halved |
| Average distance | k/2 | k/3 | The average distance is reduced to approximately 67% |
| Bisection bandwidth | 2k | 4k | The bisection bandwidth is doubled |
| All-reduce bandwidth | 4 | 5 | The all-reduce bandwidth is increased by 1/4 |
| All-to-all bandwidth | 8/k | 12/k | The all-to-all bandwidth is increased by 50% |

It can be learned from Table 2 that, as the network scale increases and a total quantity of compute nodes in the network architecture increases, communication performance of the Diagonal 2D Torus network is greatly improved compared with that of the 2D Torus network. In addition, it can be learned from a network structure of the Diagonal 2D Torus network in FIG. 5 that, similar to the 2D Torus network, the Diagonal 2D Torus network also has point symmetry. The network architecture of the Diagonal 2D Torus network is easy to implement in engineering, and communication routing between the compute nodes is simple, making overall routing algorithm configuration of the network easy.

In conclusion, compared with the 2D Torus network, the Diagonal 2D Torus network obtained by performing multi-node networking based on the network architecture provided in this embodiment of this application not only increases communication bandwidth (including the all-to-all bandwidth, the all-reduce bandwidth, and the bisection bandwidth) between the compute nodes, but also reduces communication latency (including maximum communication latency and average communication latency) between the compute nodes, thereby improving overall communication performance of the network.

**(3) A plurality of compute nodes form a k×k×k Diagonal 3D Torus network, and k is an even number.**

When a total quantity of compute nodes is k×k×k, and k is an even number, a set of the k×k×k compute nodes in a 3D network may be denoted as {(x, y, z) | 0 ≤ x ≤ k - 1, 0 ≤ y ≤ k - 1, 0 ≤ z ≤ k - 1}, and each compute node in a 3D Torus network is communicatively connected to six compute nodes.

Based on this, when the k×k×k compute nodes are communicatively connected according to a 3D Torus networking scheme, a first compute node with coordinate values of (x, y, z) is communicatively connected to a compute node with coordinate values of ((x + 1) mod k, y, z), a compute node with coordinate values of (x, (y + 1) mod k, z), a compute node with coordinate values of (x, y, (z + 1) mod k), a compute node with coordinate values of ((x + k - 1) mod k, y, z), a compute node with coordinate values of (x, (y + k - 1) mod k, z), and a compute node with coordinate values of (x, y, (z + k - 1) mod k). Based on the 3D Torus network, when a Diagonal 3D Torus network is formed in this embodiment of this application, the first compute node with coordinate values of (x, y, z) is further communicatively connected to a target compute node with coordinate values of ((x + k/2) mod k, (y + k/2) mod k, (z + k/2) mod k).

In other words, if a total quantity of a plurality of compute nodes included in a network architecture is an even number, in the Diagonal 3D Torus network formed in this embodiment of this application, each compute node is communicatively connected to seven compute nodes.

In an example, as shown in FIG. 6, it is assumed that a total quantity of a plurality of compute nodes included in a network architecture is 64, and the compute nodes form a 4×4×4 3D Torus network or a 4×4×4 Diagonal 3D Torus network. In addition, it is assumed that a horizontal direction is an X-axis, a vertical direction is a Y-axis, a direction perpendicular to both the X-axis and the Y-axis is a Z-axis, and coordinate values of a first compute node are (0, 0, 0). In this case, the first compute node is communicatively connected to a compute node with coordinate values of (1, 0, 0), a compute node with coordinate values of (0, 1, 0), a compute node with coordinate values of (0, 0, 1), a compute node with coordinate values of (3, 0, 0), a compute node with coordinate values of (0, 3, 0), and a compute node with coordinate values of (0, 0, 3) according to the 3D Torus networking scheme. Additionally, the first compute node is further communicatively connected to a target compute node with coordinate values of (2, 2, 2). The rest is deduced by analogy. After the 64 compute nodes are communicatively connected according to the 3D Torus networking scheme, each compute node is further communicatively connected to a compute node with coordinate values of ((x + k/2) mod k, (y + k/2) mod k, (z + k/2) mod k), to form a Diagonal 3D Torus network.

For ease of description, FIG. 6 shows only that, when the coordinate values of the first compute node are (0, 0, 0), the first compute node needs to be communicatively connected to seven compute nodes. Another compute node may also be communicatively connected to a target compute node in the foregoing calculation manner, which is not shown in FIG. 6.

It should be noted that, in this embodiment of this application, an example in which a network architecture includes 64 compute nodes and a total quantity of compute nodes in each of three dimensions is 4 (namely, k = 4) is used for description. However, in actual application, the network architecture may alternatively include more or fewer compute nodes, and for the plurality of compute nodes, quantities of nodes in three dimensions may alternatively be different, which is not limited in embodiments of this application. In addition, for the 64 compute nodes, an example in which a value range in each of three dimensions is [0, 3] is used in this embodiment of this application. In actual application, coordinate values of a compute node may alternatively be determined in another manner. A manner of setting coordinate values of a compute node is not limited in embodiments of this application without affecting a multi-node networking scheme and a network architecture.

For ease of comparison and description, in this embodiment of this application, it is assumed that bandwidth of a single link (namely, each communication link) between two compute nodes is 1. Based on calculation and analysis, in a 4×4×4 3D Torus network formed by 64 compute nodes, a diameter of the network is 6, an average distance is 3, bisection bandwidth is 32, all-reduce bandwidth is 6, all-to-all bandwidth is 2, and a degree of the compute node is 6. In a 4×4×4 Diagonal 3D Torus network formed by 64 compute nodes, a diameter of the network is 3, an average distance is 2.44, bisection bandwidth is 64, all-reduce bandwidth is 7, all-to-all bandwidth is 2.74, and a degree of the compute node is 7.

Similarly, the degree of the compute node is equivalent to a quantity of communication links of the compute node in the foregoing 3D network. A larger quantity of communication links of the compute node indicates better throughput performance and fault tolerance performance of the compute node. The diameter and the average distance can reflect a communication latency status of the 3D network. A smaller diameter and average distance indicate lower communication latency between the compute nodes. The bisection bandwidth, the all-reduce bandwidth, and the all-to-all bandwidth can reflect data transmission performance between the compute nodes in the 3D network. Larger bisection bandwidth, all-reduce bandwidth, and all-to-all bandwidth indicate higher communication performance between the compute nodes.

As a network scale increases, each of network parameters of the Diagonal 3D Torus network and the 3D Torus network that are obtained by performing multi-node networking based on the network architecture described in this embodiment of this application approaches a constant value. The following Table 3 provides an example calculation manner for the network parameters of the 3D Torus network and the Diagonal 3D Torus network, along with a comparison of results of the network parameters.

**Table 3**

| k×k×k compute nodes, where k is an even number | 3D Torus network | Diagonal 3D Torus network | Comparison |
|---|---|---|---|
| Degree | 6 | 7 | The degree is increased by 1/6 |
| Diameter | 3k/2 | 3k/4 | The diameter is halved |
| Average distance | 0.72k | 0.55k | The average distance is reduced to approximately 75% |
| Bisection bandwidth | 2k² | 4k² | The bisection bandwidth is doubled |
| All-reduce bandwidth | 6 | 7 | The all-reduce bandwidth is increased by 1/6 |
| All-to-all bandwidth | 8/k | 11/k | The all-to-all bandwidth is increased by approximately 37% |

It can be learned from Table 3 that, as the network scale increases and a total quantity of compute nodes in the network architecture increases, communication performance of the Diagonal 3D Torus network is greatly improved compared with that of the 3D Torus network. In addition, it can be learned from a network structure of the Diagonal 3D Torus network shown in FIG. 6 that, similar to the 3D Torus network, the Diagonal 3D Torus network also has point symmetry. The network architecture of the Diagonal 3D Torus network is easy to implement in engineering, and communication routing between the compute nodes is simple, making overall routing algorithm configuration of the network easy.

In conclusion, compared with the 3D Torus network, the Diagonal 3D Torus network obtained by performing multi-node networking based on the network architecture provided in this embodiment of this application not only increases communication bandwidth (including the all-to-all bandwidth, the all-reduce bandwidth, and the bisection bandwidth) between the compute nodes, but also reduces communication latency (including maximum communication latency and average communication latency) between the compute nodes, thereby improving overall communication performance of the network.

**In a second manner of determining a target compute node**, a plurality of compute nodes are communicatively connected according to the Torus networking scheme, and the Torus networking scheme includes at least one dimension. If there is a dimension in which a total quantity of compute nodes is an odd number among the at least one dimension, for a first compute node of the plurality of compute nodes, a target compute node with a farthest communication distance from the first compute node includes at least two compute nodes. When a total quantity of compute nodes in a first dimension is an even number, coordinate values of the at least two compute nodes in the first dimension are each a first coordinate value, where the first coordinate value is a value obtained by performing a modulo operation on (d₁ + k₁/2) with respect to k₁. When a total quantity of compute nodes in a first dimension is an odd number, a coordinate value of a first part of the at least two compute nodes in the first dimension is a second coordinate value, and a coordinate value of a second part of the at least two compute nodes in the first dimension is a third coordinate value.

A quantity of compute nodes in the first part is equal to a quantity of compute nodes in the second part, the second coordinate value is a value obtained by performing a modulo operation on (d₁ + (k₁ - 1)/2) with respect to k₁, and the third coordinate value is a value obtained by performing a modulo operation on (d₁ + (k₁ + 1)/2) with respect to k₁. The first dimension is any one of the at least one dimension, d₁ is a coordinate value of the first compute node in the first dimension, and k₁ is the total quantity of compute nodes in the first dimension.

In a possible implementation, if a total quantity of compute nodes in each of the at least one dimension is an odd number, the at least two compute nodes include a second compute node and a third compute node. A coordinate value of the second compute node in the first dimension is the second coordinate value, and a coordinate value of the second compute node in a second dimension is a fourth coordinate value, where the fourth coordinate value is a value obtained by performing a modulo operation on (d₂ + (k₂ - 1)/2) with respect to k₂. A coordinate value of the third compute node in the first dimension is the third coordinate value, and a coordinate value of the third compute node in the second dimension is a fifth coordinate value, where the fifth coordinate value is a value obtained by performing a modulo operation on (d₂ + (k₂ + 1)/2) with respect to k₂. The second dimension is any dimension among the at least one dimension other than the first dimension, d₂ is a coordinate value of the first compute node in the second dimension, and k₂ is a total quantity of compute nodes in the second dimension.

That is, when a total quantity of compute nodes in each dimension is an odd number, for the first compute node, two coordinate values may be calculated in each dimension in the foregoing manner. Therefore, there are a maximum of four target compute nodes with a farthest communication distance from each first compute node. In this case, the first compute node may be communicatively connected to all the four compute nodes, or may establish connections with only some compute nodes. In addition, when it is ensured that the overall network architecture satisfies point symmetry, the first compute node may alternatively be connected only to two compute nodes in a diagonal direction, namely, the foregoing second compute node and third compute node. This is not limited in embodiments of this application.

It can be learned that, in a case in which a plurality of compute nodes in a network architecture are communicatively connected in at least one dimension according to the Torus networking scheme, if there is a dimension in which a total quantity of compute nodes is an odd number among the at least one dimension, when a total quantity of compute nodes in a first dimension is an even number, each compute node in the Diagonal Torus network is further communicatively connected to one compute node based on a Torus network; or when a total quantity of compute nodes in the first dimension is an odd number, each compute node in the Diagonal Torus network is further communicatively connected to at least two compute nodes based on the Torus network.

When the total quantity of compute nodes in the first dimension is an even number, a first compute node in the first dimension in the Diagonal Torus network is further communicatively connected to a target compute node based on the original Torus network. A manner of determining the target compute node is similar to the foregoing first manner of determining a target compute node. For a specific implementation process, refer to the foregoing related descriptions. Details are not described herein again.

Next, the Diagonal 1D Torus network, the Diagonal 2D Torus network, and the Diagonal 3D Torus network are still used as examples to describe a process of communicatively connecting the first compute node to at least two compute nodes in the Diagonal Torus network when a total quantity of compute nodes in each of at least one dimension is an odd number, and among at least one dimension, there is a dimension in which a total quantity of compute nodes is an even number and a dimension in which a total quantity of compute nodes is an odd number.

First, when a total quantity of compute nodes in each of at least one dimension is an odd number, a process of communicatively connecting the first compute node to at least two compute nodes in the Diagonal Torus network is described.
**(1) A plurality of compute nodes form a Diagonal 1D Torus network, and a total quantity of compute nodes is an odd number.**

When a total quantity of compute nodes is k, and k is an odd number, a set of the k compute nodes in a 1D network may be denoted as {0, 1, ..., k - 1}. Based on the 1D Torus network, when a Diagonal 1D Torus network is formed in this embodiment of this application, a first compute node with a coordinate value of d is further communicatively connected to a target compute node with a coordinate value of (d + (k - 1)/2) mod k and a target compute node with a coordinate value of (d + (k + 1)/2) mod k.

In other words, if a total quantity of a plurality of compute nodes included in a network architecture is an odd number, in the Diagonal 1D Torus network formed in this embodiment of this application, each compute node is communicatively connected to four compute nodes. Among the four compute nodes, two compute nodes are nodes that are communicatively connected according to a 2D Torus networking scheme, and the other two compute nodes are nodes that are additionally connected according to the technical solution in this embodiment of this application.

In an example, refer to FIG. 7. It is assumed that a total quantity of a plurality of compute nodes included in a network architecture is k = 9, and a coordinate value of a first compute node is d = 1. In this case, the first compute node is first communicatively connected to compute nodes with coordinate values of 0 and 2 according to a 1D Torus networking scheme. Additionally, the first compute node is communicatively connected to two target compute nodes with coordinate values of 5 and 6. The rest is deduced by analogy. After the 9 compute nodes are communicatively connected according to the 1D Torus networking scheme, each compute node is further communicatively connected to a compute node with a coordinate value of (d + (k - 1)/2) mod k and a compute node with a coordinate value of (d + (k + 1)/2) mod k, to form a Diagonal 1D Torus network.

It should be noted that the 1D network in FIG. 7 is described by using an example in which a network architecture includes 9 compute nodes, that is, k = 9. However, in actual application, the network architecture may alternatively include more or fewer compute nodes, which is not limited in embodiments of this application. In addition, an example in which the 9 compute nodes are numbered from 0 to 8 is used in this embodiment of this application. In actual application, the compute nodes may alternatively be numbered in another manner. A manner of setting a coordinate value of a compute node is not limited in embodiments of this application without affecting a multi-node networking scheme and a network architecture.

It can be learned that, when a total quantity of compute nodes is an odd number, after the plurality of compute nodes are communicatively connected according to the 1D Torus networking scheme, each compute node further needs to be additionally connected to at least two compute nodes. Therefore, compared with the 1D Torus network, the Diagonal 1D Torus network increases a degree of each compute node, reduces communication latency, and improves communication bandwidth, thereby significantly improving overall communication performance of the network.

**(2) A plurality of compute nodes form a k×k Diagonal 2D Torus network, and k is an odd number.**

When a total quantity of compute nodes is k×k, and k is an odd number, a set of the k×k compute nodes in a 2D network may be denoted as {(x, y) | 0 ≤ x ≤ k - 1, 0 ≤ y ≤ k - 1}. Based on a 2D Torus network, when a Diagonal 2D Torus network is formed in this embodiment of this application, a first compute node with coordinate values of (x, y) is further communicatively connected to target compute nodes with coordinate values of (x + (k - 1)/2) mod k and (x + (k + 1)/2) mod k in an X-axis direction, and (y + (k - 1)/2) mod k and (y + (k + 1)/2) mod k in a Y-axis direction.

In other words, if a total quantity of a plurality of compute nodes included in a network architecture is an odd number, in the Diagonal 2D Torus network formed in this embodiment of this application, each compute node is communicatively connected to at least six compute nodes. Among the at least six compute nodes, four compute nodes are nodes that are communicatively connected according to a 2D Torus networking scheme, and the other compute nodes are nodes that are additionally connected according to the technical solution in this embodiment of this application.

In a possible implementation, when a total quantity k of compute nodes in each of at least one dimension is an odd number, the first compute node with coordinate values of (x, y) in the Diagonal 2D Torus network is communicatively connected to all compute nodes with a farthest communication distance from the first compute node. In this case, based on the 2D Torus network, the first compute node with coordinate values of (x, y) is further communicatively connected to a target compute node with coordinate values of ((x + (k - 1)/2) mod k, (y + (k - 1)/2) mod k), a target compute node with coordinate values of ((x + (k - 1)/2) mod k, (y + (k + 1)/2) mod k), a target compute node with coordinate values of ((x + (k + 1)/2) mod k, (y + (k - 1)/2) mod k), and a target compute node with coordinate values of ((x + (k + 1)/2) mod k, (y + (k + 1)/2) mod k), to form a Diagonal 2D Torus network.

In this implementation, each compute node is communicatively connected to all compute nodes with a farthest communication distance from the compute node. Therefore, communication latency of the entire Diagonal 2D Torus network is greatly improved. However, because each first compute node needs to be additionally connected to four target compute nodes based on the 2D Torus network, a quantity of additional communication connections required by the entire Diagonal 2D Torus network is 4×k×k, which increases networking costs to some extent.

In another possible implementation, when a total quantity k of compute nodes in each of at least one dimension is an odd number, the first compute node with coordinate values of (x, y) in the Diagonal 2D Torus network is connected, only in a diagonal direction, to two compute nodes with a farthest communication distance from the first compute node. In this case, based on the 2D Torus network, the first compute node with coordinate values of (x, y) is further communicatively connected to a target compute node with coordinate values of ((x + (k - 1)/2) mod k, (y + (k - 1)/2) mod k) and a target compute node with coordinate values of ((x + (k + 1)/2) mod k, (y + (k + 1)/2) mod k), to form a Diagonal 2D Torus network.

In this implementation, when target compute nodes with a farthest communication distance from the first compute node are connected to the first compute node, only in the diagonal direction, two compute nodes with a farthest communication distance from the first compute node need to be connected to the first compute node. In this way, communication latency of the 2D Torus network is improved, and networking costs are not high.

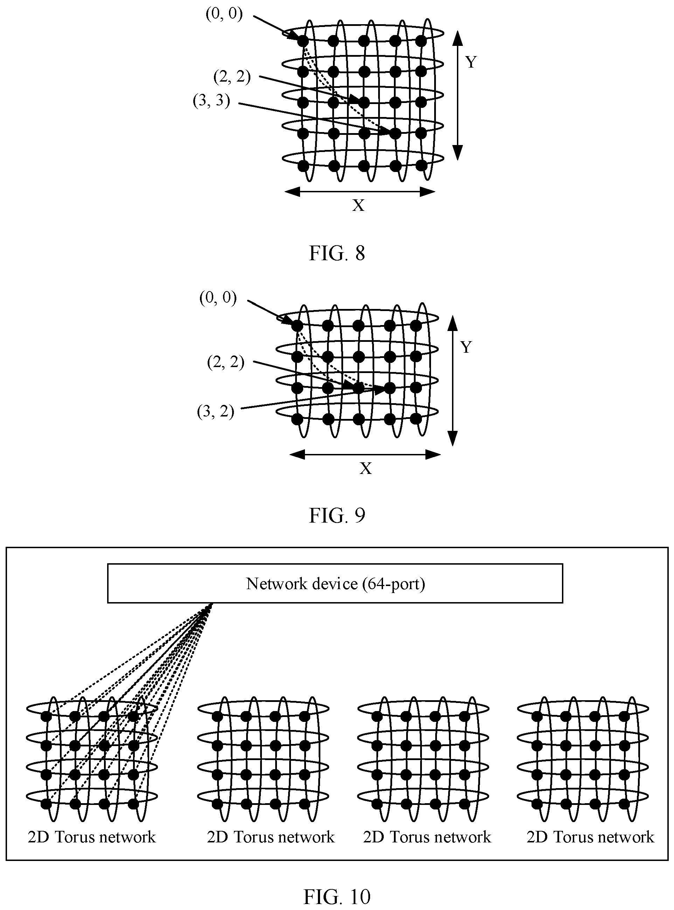

In an example, refer to FIG. 8. It is assumed that a total quantity of a plurality of compute nodes included in a network architecture is 25, and the compute nodes form a 5×5 2D Torus network or a 5×5 Diagonal 2D Torus network. In addition, it is assumed that a horizontal direction is an X-axis, a vertical direction is a Y-axis, and coordinate values of a first compute node are (0, 0). In this case, the first compute node is communicatively connected to a compute node with coordinate values of (1, 0), a compute node with coordinate values of (0, 1), a compute node with coordinate values of (0, 4), and a compute node with coordinate values of (4, 0) according to the 2D Torus networking scheme. Additionally, the first compute node is communicatively connected to a target compute node with coordinate values of (2, 2) and a target compute node with coordinate values of (3, 3).

The rest is deduced by analogy. After the 25 compute nodes are communicatively connected according to the 2D Torus networking scheme, each compute node is further connected to a compute node with coordinate values of ((x + (k - 1)/2) mod k, (y + (k - 1)/2) mod k) and a compute node with coordinate values of ((x + (k + 1)/2) mod k, (y + (k + 1)/2) mod k), to form a Diagonal 2D Torus network.

It should be noted that the 2D network described in the foregoing example is described by using merely an example in which a network architecture includes 25 compute nodes and a total quantity of compute nodes in each of two dimensions is 5 (namely, k = 5). However, in actual application, the network architecture may alternatively include more or fewer compute nodes, which is not limited in embodiments of this application. In addition, for the 25 compute nodes, an example in which a value range in each of two dimensions is [0, 4] is used in this embodiment of this application. In actual application, coordinate values of a compute node may alternatively be determined in another manner. A manner of setting coordinate values of a compute node is not limited in embodiments of this application without affecting a multi-node networking scheme and a network architecture.

It can be learned that, when a total quantity of compute nodes in each of at least one dimension is an odd number, after the plurality of compute nodes are communicatively connected according to the 2D Torus networking scheme, each compute node further needs to be additionally connected to at least two compute nodes. Therefore, compared with the 2D Torus network, the Diagonal 2D Torus network increases a degree of each compute node, reduces communication latency, and improves communication bandwidth, thereby significantly improving overall communication performance of the network.

**(3) A plurality of compute nodes form a k×k×k Diagonal 3D Torus network, and k is an odd number.**

When a total quantity of compute nodes is k×k×k, and k is an odd number, a set of the k×k×k compute nodes in a 3D network may be denoted as {(x, y, z) | 0 ≤ x ≤ k - 1, 0 ≤ y ≤ k - 1, 0 ≤ z ≤ k - 1}. Based on a 3D Torus network, when a Diagonal 3D Torus network is formed in this embodiment of this application, a first compute node with coordinate values of (x, y, z) is further communicatively connected to second compute nodes with coordinate values of (x + (k - 1)/2) mod k and (x + (k + 1)/2) mod k in an X-axis direction, (y + (k - 1)/2) mod k and (y + (k + 1)/2) mod k in a Y-axis direction, and (z + (k - 1)/2) mod k and (z + (k + 1)/2) mod k in a Z-axis direction.

In other words, if a total quantity of a plurality of compute nodes included in a network architecture is an odd number, in the Diagonal 3D Torus network formed in this embodiment of this application, each compute node is communicatively connected to at least eight compute nodes. Among the at least eight compute nodes, six compute nodes are nodes that are communicatively connected according to a 3D Torus networking scheme, and the other compute nodes are nodes that are additionally connected according to the technical solution in this embodiment of this application.

In a possible implementation, when a total quantity k of compute nodes in each of at least one dimension is an odd number, the first compute node with coordinate values of (x, y, z) in the Diagonal 3D Torus network is communicatively connected to all compute nodes with a farthest communication distance from the first compute node. In this case, based on the 3D Torus network, the first compute node with coordinate values of (x, y, z) is further communicatively connected to a target compute node with coordinate values of ((x + (k + 1)/2) mod k, (y + (k + 1)/2) mod k, and (z + (k + 1)/2) mod k), a target compute node with coordinate values of ((x + (k + 1)/2) mod k, (y + (k - 1)/2) mod k, (z + (k + 1)/2) mod k), a target compute node with coordinate values of ((x + (k + 1)/2) mod k, (y + (k + 1)/2) mod k, (z + (k - 1)/2) mod k), a target compute node with coordinate values of ((x + (k + 1)/2) mod k, (y + (k - 1)/2) mod k, (z + (k - 1)/2) mod k), a target compute node with coordinate values of ((x + (k - 1)/2) mod k, (y + (k + 1)/2) mod k, (z + (k + 1)/2) mod k), a target compute node with coordinate values of ((x + (k - 1)/2) mod k, (y + (k - 1)/2) mod k, (z + (k + 1)/2) mod k), a target compute node with coordinate values of ((x + (k - 1)/2) mod k, (y + (k + 1)/2) mod k, (z + (k - 1)/2) mod k), and a target compute node with coordinate values of ((x + (k - 1)/2) mod k, (y + (k - 1)/2) mod k, and (z + (k - 1)/2) mod k), to form a Diagonal 3D Torus network.

In this implementation, each compute node is communicatively connected to all compute nodes with a farthest communication distance from each compute node. Therefore, communication latency of the entire Diagonal 3D Torus network is greatly improved. However, because each first compute node needs to be additionally connected to four target compute nodes based on the 3D Torus network, a quantity of additional communication connections required by the entire Diagonal 3D Torus network is 8×k×k×k, which increases networking costs to some extent.

In another possible implementation, when a total quantity k of compute nodes in each of at least one dimension is an odd number, the first compute node with coordinate values of (x, y, z) in the Diagonal 3D Torus network is connected, only in a diagonal direction, to two compute nodes with a farthest communication distance from the first compute node. In this case, based on the 3D Torus network, the first compute node with coordinate values of (x, y, z) is further communicatively connected to a target compute node with coordinate values of ((x + (k - 1)/2) mod k, (y + (k - 1)/2) mod k, (z + (k - 1)/2) mod k) and a target compute node with coordinate values of ((x + (k + 1)/2) mod k, (y + (k + 1)/2) mod k, (z + (k + 1)/2) mod k), to form a Diagonal 3D Torus network.

In this implementation, when target compute nodes with a farthest communication distance from the first compute node are connected to the first compute node, only in the diagonal direction, two compute nodes with a farthest communication distance from the first compute node need to be connected to the first compute node. In this way, communication latency of the 3D Torus network is improved, and networking costs are not high.

In an example, in the 3×3×3 3D Torus network shown in FIG. 1, it is assumed that coordinate values of a first compute node are (0, 0, 0). In this case, in the Diagonal 3D Torus network provided in this embodiment of this application, the first compute node is further connected to a compute node with coordinate values of (1, 1, 1) and a compute node with coordinate values of (2, 2, 2). The rest is deduced by analogy. Based on the foregoing 3D Torus network, each of 27 compute nodes is further communicatively connected to a compute node with coordinate values of ((x + (k - 1)/2) mod k, (y + (k - 1)/2) mod k, (z + (k - 1)/2) mod k) and a compute node with coordinate values of ((x + (k + 1)/2) mod k, (y + (k + 1)/2) mod k, and (z + (k + 1)/2) mod k), to form a Diagonal 3D Torus network.

It should be noted that the 3D network described in the foregoing example is described by using merely an example in which a network architecture includes 27 compute nodes and a total quantity of compute nodes in each of three dimensions is 3 (namely, k = 3). However, in actual application, the network architecture may alternatively include more or fewer compute nodes, which is not limited in embodiments of this application. In addition, for the 27 compute nodes, an example in which a value range in each of three dimensions is [0, 2] is used in this embodiment of this application. In actual application, coordinate values of a compute node may alternatively be determined in another manner. A manner of setting coordinate values of a compute node is not limited in embodiments of this application without affecting a multi-node networking scheme and a network architecture.

It can be learned that, when a total quantity of compute nodes in each of at least one dimension is an odd number, after the plurality of compute nodes are communicatively connected according to the 3D Torus networking scheme, each compute node further needs to be additionally connected to at least two compute nodes. Therefore, compared with the 3D Torus network, the Diagonal 3D Torus network increases a degree of each compute node, reduces communication latency, and improves communication bandwidth, thereby significantly improving overall communication performance of the network.

Second, when there is a dimension in which a total quantity of compute nodes is an odd number among at least one dimension, a process of communicatively connecting the first compute node to at least two compute nodes in the Diagonal Torus network is described.

When a plurality of compute nodes are communicatively connected according to the Torus networking scheme, and the Torus networking scheme includes at least one dimension, if among the at least one dimension, there are both a dimension in which a total quantity of compute nodes is an odd number and a dimension in which a total quantity of compute nodes is an even number, and it is assumed that a total quantity of compute nodes in a first dimension in which a first compute node is located is an odd number, and a total quantity of compute nodes in a second dimension in which the first compute node is located is an even number, the first compute node needs to be connected, in the first dimension, to target compute nodes indicated by two different coordinate values, and needs to be connected, in the second dimension, to a target compute node indicated by one coordinate value.

In an example, when a total quantity of compute nodes is k₁×k₂, k₁ is an odd number, and k₂ is an even number, a set of the k₁×k₂ compute nodes in a 2D network may be denoted as {(x, y) | 0 ≤ x ≤ k₁ - 1, 0 ≤ y ≤ k₂ - 1}. In this case, based on a 2D Torus network, a first compute node with coordinate values of (x, y) in a Diagonal 2D Torus network is further communicatively connected to a target compute node with coordinate values of ((x + (k₁ - 1)/2) mod k₁, (y + k₂/2) mod k₂) and a target compute node with coordinate values of ((x + (k₁ - 1)/2) mod k₁, (y + k₂/2) mod k₂). Similarly, when k₁ is an even number, and k₂ is an odd number, based on the 2D Torus network, the first compute node with coordinate values of (x, y) in the Diagonal 2D Torus network is further communicatively connected to a target compute node with coordinate values of ((x + k₁/2) mod k₁, (y + (k₂ - 1)/2) mod k₂) and a target compute node with coordinate values of ((x + k₁/2) mod k₁, (y + (k₂ + 1)/2) mod k₂).

In an example, refer to FIG. 9. Twenty compute nodes are communicatively connected according to a 2D Torus networking scheme, to form a 5×4 2D Torus network. In the 2D Torus network, five compute nodes are arranged in each row, and four compute nodes are arranged in each column. Based on the 2D Torus network, a first compute node with coordinate values of (0, 0) is further communicatively connected to a target compute node with coordinate values of (2, 2) and a target compute node with coordinate values of (3, 2).

The rest is deduced by analogy. After the twenty compute nodes are communicatively connected according to the 2D Torus networking scheme, each compute node is further communicatively connected to two compute nodes with a farthest communication distance from the compute node, to form a Diagonal 2D Torus network.

It should be understood that, for a first compute node in a network architecture, the foregoing two manners of determining a target compute node are merely described by using examples in which a Diagonal 1D Torus network, a Diagonal 2D Torus network, and a Diagonal 3D Torus network are formed. With emergence of larger-scale Torus networks, based on the technical concept of connecting compute nodes that are farthest apart in communication distance under the Torus networking scheme, which is provided in this embodiment of this application, network architectures of higher-dimensional Torus networks may also be improved, to form higher-dimensional Diagonal Torus networks. Implementations are similar, and are not described one by one herein.

In addition, regardless of a quantity of dimensions in which the plurality of compute nodes in the network architecture are connected for networking, for the first compute node, once a total quantity of compute nodes corresponding to each dimension in the network architecture is determined, coordinate values of compute nodes that need to be communicatively connected to the first compute node in each dimension can be sequentially determined in the foregoing manner. Thus, a target compute node to be communicatively connected to the first compute node is determined by combining coordinate values of compute nodes that need to be communicatively connected to the first compute node in at least one dimension.

It should be further noted that, although the calculation manners for the target compute node that is additionally connected to the first compute node are provided in the foregoing embodiments, when there are a plurality of target compute nodes, the first compute node in any one of the foregoing embodiments may be communicatively connected to all target compute nodes with a farthest communication distance from the first compute node, or may be communicatively connected to only some target compute nodes. This is not limited in embodiments of this application.

In conclusion, in this embodiment of this application, after the plurality of compute nodes in the network architecture in this application are communicatively connected according to the Torus networking scheme, each compute node is further communicatively connected to at least one compute node with a farthest communication distance from the compute node under the Torus networking scheme. Therefore, compared with a Torus network, the network architecture described in this embodiment of this application not only increases a degree of each compute node and improves throughput and fault tolerance of the compute node, but also reduces communication latency between the compute nodes, thereby improving overall communication performance of a network.

In some embodiments, for the network architecture described in the foregoing embodiments, when the first compute node in the network architecture is communicatively connected to the target compute node, there are the following two manners of communicatively connecting the first compute node to the target compute node.

**In a first connection manner**, the first compute node is connected to the target compute node through physical connection.

For this connection manner, with reference to FIG. 4 to FIG. 9, the first compute node may be connected to the target compute node through physical wiring.

**In a second connection manner**, the network architecture further includes at least one network device, and the first compute node is communicatively connected to the target compute node through the at least one network device.

The at least one network device may include one network device, or may include a plurality of network devices. This is not limited in embodiments of this application. The at least one network device may be a switch, or may be another routing device that can implement data forwarding. A specific type of the network device is not limited in embodiments of this application, provided that a plurality of compute nodes can be commutatively connected.

In a possible implementation, the first compute node is communicatively connected to the target compute node through a same network device. In this case, there is a shortest communication route between the first compute node and the target compute node, thereby reducing communication latency between the first compute node and the target compute node, and improving communication performance.

When the network architecture includes a plurality of compute nodes, after the plurality of compute nodes are communicatively connected according to a Torus networking scheme, there are a plurality of pairs of compute nodes that are farthest apart in communication distance. The plurality of pairs of compute nodes may be fully connected through a same network device, or may be fully connected through a plurality of network devices. This is not limited in embodiments of this application.

It should be understood that, if there is a dimension in which a total quantity of compute nodes is an odd number in a Torus network, the first compute node has two target compute nodes with a farthest communication distance from the first compute node in the Torus network. In this case, the first compute node may be communicatively connected to the two target compute nodes through a same network device, or may be communicatively connected to the two target compute nodes through two network devices. This is not limited in embodiments of this application.

When all compute nodes with a farthest communication distance are fully connected through one network device, a requirement on a quantity of ports of the network device is relatively high, and networking costs of using a plurality of nodes combined with the network device are relatively high. When all compute nodes with a farthest communication distance are fully connected through a plurality of network devices, a requirement on a quantity of ports of the network device is relatively low, and networking costs of using a plurality of nodes combined with the network devices are relatively low. Therefore, flexible selection may be made based on an actual requirement. This is not limited in embodiments of this application.

It should be noted that, when the first compute node can be communicatively connected to the target compute node through at least one network device, a specific implementation solution in which each of all compute nodes in the network architecture is communicatively connected, through at least one network device, to a compute node with a farthest communication distance from the compute node under the Torus networking scheme is not limited in embodiments of this application.

In some embodiments, a plurality of compute nodes included in the network architecture may be formed into a plurality of topologically identical Torus networks according to the Torus networking scheme, and compute nodes in the plurality of Torus networks are fully connected through at least one network device.

Next, an example in which the network architecture includes 64 compute nodes and at least one network device, and the 64 compute nodes form four 4×4 2D Torus networks is used to describe a specific manner in which compute nodes in a plurality of Torus networks are fully connected through the at least one network device.

**In a first case**, the network architecture includes one network device, and all compute nodes in a plurality of Torus networks in the network architecture are communicatively connected through a same network device.

In other words, when the network architecture includes one network device, all compute nodes in the network architecture are connected to the network device, so that each compute node can be communicatively connected, through the network device, to at least one compute node with a farthest communication distance from the compute node.

In an example, refer to FIG. 10. In four 4×4 2D Torus networks included in the network architecture, all 64 compute nodes included are connected to one network device. In this case, a first compute node with coordinate values of (0, 0) in each 2D Torus network may be communicatively connected to a target compute node with coordinate values of (2, 2) through the network device. In addition, compute nodes in different 2D Torus networks may also be communicatively connected through the network device.

It can be learned that, when the network architecture includes only one network device, all compute nodes in a plurality of Torus networks are communicatively connected through the network device, that is, all compute nodes in the network architecture are fully connected through one network device. In this way, based on the network device, any two compute nodes in the network architecture can directly communicate with each other, thereby achieving a shortest communication route.

It should be noted that, when all compute nodes in the four 4×4 2D Torus networks are fully connected through one network device, a required quantity of ports of the network device is 64. Therefore, when all compute nodes in a network architecture are fully connected through one network device, a quantity of ports of the network device needs to be greater than or equal to a total quantity of the compute nodes in the network architecture. This network architecture has a specific requirement on a quantity of ports of a network device, and networking costs are relatively high.

Based on this, to reduce multi-node networking costs, when compute nodes in a plurality of Torus networks may be fully connected through a plurality of network devices, it is sufficient that a total quantity of ports of the plurality of network devices is greater than or equal to a total quantity of compute nodes in the network architecture. For example, the 64-port network device is replaced with eight 16-port network devices or four 16-port network devices, which increases a quantity of network devices and reduces a quantity of ports of a single network device, thereby controlling multi-node networking costs.

It should be understood that a quantity of network devices that need to be used varies with networking architectures of the network devices, and may be flexibly set based on an actual requirement. This is not limited in embodiments of this application.

When the network architecture includes a plurality of network devices, all compute nodes with a farthest communication distance in a plurality of Torus networks may be communicatively connected through the plurality of network devices. In this case, for each Torus network, all compute nodes in the Torus network may be communicatively connected through the plurality of network devices. For details, refer to the following second case. Alternatively, only some compute nodes in the Torus network may be communicatively connected through a same network device. For details, refer to the following third case.

**In a second case**, the network architecture includes a plurality of network devices, and in any Torus network, each compute node is communicatively connected, through the plurality of network devices, to a target compute node with a farthest communication distance from the compute node.

In a possible implementation, when compute nodes in each Torus network are communicatively connected, through a plurality of network devices, to a target compute node with a farthest communication distance from the compute nodes, to implement full connectivity between all compute nodes in the network architecture, a solution in which all compute nodes in a plurality of Torus networks are fully connected through a plurality of network devices using a Torus networking scheme combined with a Clos networking scheme may be used.

In an example, in a Clos networking architecture, after four 16-port network devices at a first layer are communicatively connected to compute nodes in a plurality of Torus networks, four 16-port network devices at a second layer are communicatively connected to the four 16-port network devices at the first layer, thereby implementing full connectivity between all the compute nodes in the network architecture.

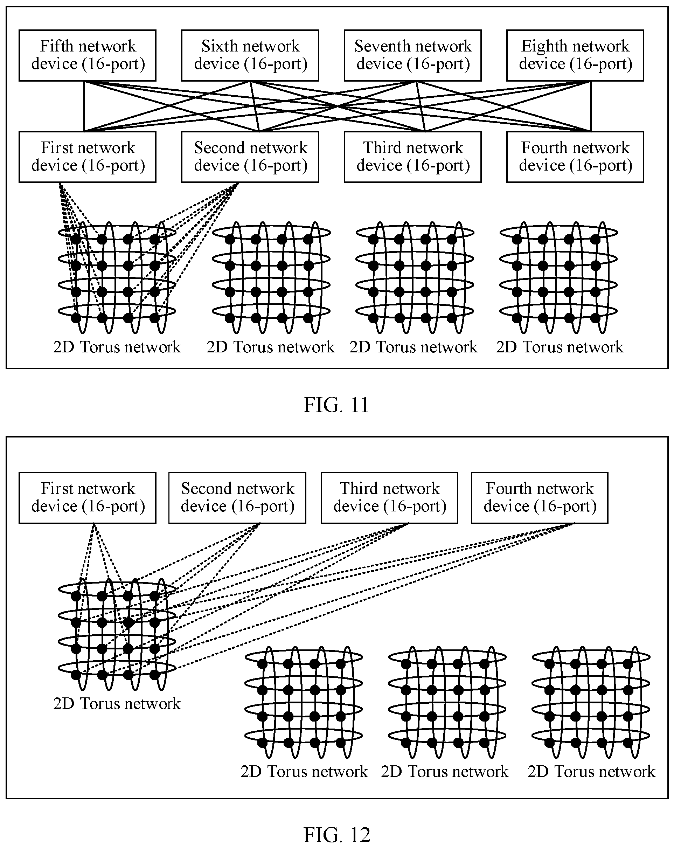

Refer to FIG. 11. An example in which the network architecture includes eight 16-port network devices is used, and full connectivity between all compute nodes in four 4×4 2D Torus networks are implemented through the eight 16-port network devices. In each 2D Torus network, eight compute nodes in first two columns are connected to one network device at a first layer, eight compute nodes in last two columns are connected to another network device at the first layer, and the two network devices connected to the compute nodes in the same Torus network are communicatively connected through one network device at a second layer.

A compute node with coordinate values of (0, 0), a compute node with coordinate values of (1, 0), a compute node with coordinate values of (0, 1), a compute node with coordinate values of (1, 1), a compute node with coordinate values of (0, 2), a compute node with coordinate values of (1, 2), a compute node with coordinate values of (0, 3), and a compute node with coordinate values of (1, 3) in a first 2D Torus network are communicatively connected to a first network device. A compute node with coordinate values of (2, 0), a compute node with coordinate values of (3, 0), a compute node with coordinate values of (2, 1), a compute node with coordinate values of (3, 1), a compute node with coordinate values of (2, 2), a compute node with coordinate values of (3, 2), a compute node with coordinate values of (2, 3), and a compute node with coordinate values of (3, 3) are communicatively connected to a second network device. The first network device and the second network device are communicatively connected through a fifth network device.

In this way, the compute node with coordinate values of (0, 0) in the first 2D Torus network may communicate with the compute node with coordinate values of (2, 2) via a communication route "from the first network device to the fifth network device to the second network device". Similarly, the compute node with coordinate values of (0, 1), the compute node with coordinate values of (0, 2), the compute node with coordinate values of (0, 3), the compute node with coordinate values of (1, 0), the compute node with coordinate values of (1, 1), the compute node with coordinate values of (1, 2), and the compute node with coordinate values of (1, 3) in the first 2D Torus network also communicate with the compute node with coordinate values of (2, 3), the compute node with coordinate values of (2, 0), the compute node with coordinate values of (2, 1), the compute node with coordinate values of (3, 2), the compute node with coordinate values of (3, 3), the compute node with coordinate values of (3, 0), and the compute node with coordinate values of (3, 1) via the communication route "from the first network device to the fifth network device to the second network device". In this way, all compute nodes in the first 2D Torus network are communicatively connected to a compute node with a farthest communication distance from the compute nodes in the first 2D Torus sequentially via the communication route "from the first network device to the fifth network device to the second network device".

When networking is performed according to the foregoing second case, it only needs to be ensured that a total quantity of ports of a plurality of network devices that are directly connected to all compute nodes in a plurality of Torus networks in a first layer of a Clos architecture is greater than or equal to a total quantity of compute nodes in the network architecture. This networking scheme has a low requirement on a quantity of ports of the network devices.

It should be noted that, FIG. 11 is merely an example in which the compute nodes in the first two columns and the last two columns in the first 2D Torus network are connected to different network devices. Alternatively, during specific implementation, compute nodes in first two rows may be connected to the first network device, and compute nodes in last two rows may be connected to the second network device. Provided that a quantity of ports of network devices at the first layer is not exceeded, a quantity of compute nodes connected to each network device at the first layer and a 2D Torus network to which the compute nodes connected to each network device belong are not limited in embodiments of this application.

**In a third case**, the network architecture includes a plurality of network devices, and in any Torus network, some compute nodes are communicatively connected, through a same network device, to at least one compute node with a farthest communication distance from the compute nodes.

In a possible implementation, a target network device corresponding to a pair of compute nodes that are farthest apart in communication distance in each Torus network is determined based on a quantity of network devices, to implement, through the target network device, a communication connection between some compute nodes that are farthest apart in communication distance in the Torus network.

In other words, for any Torus network, some compute nodes in the Torus network are communicatively connected, through a network device, to at least one compute node with a farthest communication distance from the compute nodes, and other compute nodes are communicatively connected, through another network device, to at least one compute node with a farthest communication distance from the compute nodes. In this way, in the network architecture, each compute node can be communicatively connected, through one network device, to a compute node with a farthest communication distance from the compute node. Compared with the foregoing second case, communication latency between compute nodes that are farthest apart in communication distance is further reduced, and communication performance is improved.

If a quantity of the plurality of network devices is P, and a quantity of pairs of compute nodes that are farthest apart in communication distance in each Torus network is Q, for each Torus network, Q/P pairs of compute nodes are connected to a same network device. For example, if P = 4, and Q = 8, two pairs of compute nodes, namely, four compute nodes, in each Torus network are connected to a same network device.

In an example, refer to FIG. 12. An example in which the network architecture includes four 16-port network devices is used, and full connectivity between all compute nodes in four 4×4 2D Torus networks are implemented through the eight 16-port network devices. In each 2D Torus network, compute nodes with coordinate values of (0, 0) and (2, 2) are communicatively connected through a first network device, and compute nodes with coordinate values of (2, 0) and (0, 2) are also communicatively connected through the first network device; compute nodes with coordinate values of (1, 0) and (3, 2) are communicatively connected through a second network device, and compute nodes with coordinate values of (3, 0) and (1, 2) are also communicatively connected through the second network device; compute nodes with coordinate values of (0, 1) and (2, 3) are communicatively connected through a third network device, and compute nodes with coordinate values of (2, 1) and (0, 3) are also communicatively connected through the third network device; and compute nodes with coordinate values of (1, 1) and (3, 3) are communicatively connected through a fourth network device, and compute nodes with coordinate values of (3, 1) and (1, 3) are also communicatively connected through the fourth network device.

When networking is performed according to the foregoing third case, it only needs to be ensured that a total quantity of ports of a plurality of network devices is greater than or equal to a total quantity of compute nodes in the network architecture. This networking scheme also has a low requirement on a quantity of ports of the network devices. In addition, compared with the foregoing second case, in this networking manner, only four network devices are used to implement full connectivity between the foregoing 64 compute nodes, thereby reducing networking costs, and reducing communication latency caused by an excessive quantity of networking layers of the network devices.

It should be noted that FIG. 10 to FIG. 12 show only a manner of connecting a compute node in the first 2D Torus network to at least one network device, and a manner of connecting a compute node in the other three 2D Torus networks to the at least one network device is similar to this, and is not shown in the figure. In addition, for ease of description, FIG. 10 to FIG. 12 are merely examples in which a total quantity of compute nodes in each of two dimensions in the 2D Torus network is the same, and is an even number. When a plurality of Torus networks formed by a plurality of compute nodes in the network architecture include a plurality of dimensions, and total quantities of compute nodes in the plurality of dimensions are different, or a total quantity of compute nodes in at least one dimension is an odd number, reference may still be made to the connection manners described in the foregoing three cases, to communicatively connect, through at least one network device, compute nodes that are farthest apart in communication distance in the plurality of Torus networks. A networking manner is similar, and details are not described herein again.

In conclusion, when the network architecture includes one network device, reference may be made to the connection manner in FIG. 10, and all compute nodes in the plurality of Torus networks are connected to a same network device, to ensure that all the compute nodes in the plurality of Torus networks are fully connected through the network device. When the network architecture includes a plurality of network devices, reference may be made to the connection manner in FIG. 11 or FIG. 12, and some compute nodes in each Torus network are connected to a same network device, to ensure that all compute nodes in the plurality of Torus networks are fully connected through the plurality of network devices. That is, when the network architecture includes at least one network device and a plurality of Torus networks formed by a plurality of compute nodes, the at least one network device may be used to implement a communication connection between compute nodes that are farthest apart in communication distance in each Torus network, to form a Diagonal Torus network, thereby reducing communication latency between the compute nodes in the network architecture.

In some embodiments, a plurality of topologically identical Torus networks may logically form a larger-scale or smaller-scale Diagonal Torus network. When a first compute node in each Torus network is connected to a target compute node through at least one network device, compute nodes at same positions in respective ones of the plurality of Torus networks may be connected to a same network device. Based on this, when a plurality of Torus networks are logically formed into a larger-scale or smaller-scale Diagonal Torus network, each compute node in the Diagonal Torus network may be commutatively connected, through a same network device, to a compute node with a farthest communication distance from the compute node, thereby greatly reducing communication latency between compute nodes in the logical network.

In a possible implementation, as shown in FIG. 12, two compute nodes having a longest communication distance in each Torus network are communicatively connected through a same network device, and compute nodes at same positions in respective ones of a plurality of Torus networks are connected to a same network device.

Based on the network architecture shown in FIG. 12, a Diagonal Torus network that may be logically formed by four Torus networks includes: a Diagonal 1D Torus network including four compute nodes, a 4×4 Diagonal 2D Torus network, and a 4×4×4 Diagonal 3D Torus network.

When the Diagonal 1D Torus network including four compute nodes is formed, a first row in a first 2D Torus network is used as an example. A compute node with coordinate values of (0, 0), a compute node with coordinate values of (1, 0), a compute node with coordinate values of (2, 0), and a compute node with coordinate values of (3, 0) are connected according to a 1D Torus networking scheme. In addition, a compute node with coordinate values of (0, 0) is communicatively connected, through a first network device, to a compute node with coordinate values of (2, 0) and with a farthest communication distance from the compute node, and a compute node with coordinate values of (1, 0) is communicatively connected, through a second network device, to a compute node with coordinate values of (3, 0) and with a farthest communication distance from the compute node. In this way, in the network architecture shown in FIG. 12, a connection manner between compute nodes in each row or each column in a single 4×4 2D Torus network meets an actual networking scheme of the Diagonal 1D Torus network. Therefore, each row or each column in the single 2D Torus network in the network architecture may be logically operated as a Diagonal 1D Torus network.

When the 4×4 Diagonal 2D Torus network is formed, a first 2D Torus network is used as an example. In the 2D Torus network, compute nodes with coordinate values of (0, 0) and (2, 2) are interconnected through a first network device, compute nodes with coordinate values of (0, 2) and (2, 0) are also interconnected through a first network device, and other compute nodes that are farthest apart in communication distance in the 2D Torus network are also communicatively connected through another network device. In this way, in the network architecture shown in FIG. 12, a network formed by connecting compute nodes of a single 2D Torus network to a network device may be logically operated as a Diagonal 2D Torus network.

When the 4×4×4 Diagonal 3D Torus network is formed, a compute node with coordinate values of (0, 0) in a first 2D Torus network and a compute node with coordinate values of (2, 2) in a third 2D Torus network are a pair of compute nodes that are farthest apart in communication distance in a 3D Torus network, where in the network architecture shown in FIG. 12, the two compute nodes are communicatively connected through a first network device, and other compute nodes that are farthest apart in communication distance in the 3D Torus network are also communicatively connected through a network device. In this way, in the network architecture shown in FIG. 12, an overall connection relationship of 64 compute nodes meets an actual networking scheme of the Diagonal 3D Torus network. Therefore, four 2D Torus networks in the network architecture can, as a whole, logically operate as a Diagonal 3D Torus network.

It should be understood that, when a plurality of compute nodes in the network architecture form a Torus network, a Diagonal Torus network with a dimension equal to or less than that of a Torus network may alternatively be logically formed based on the Torus network. For example, when a plurality of compute nodes form a 4×4 2D Torus network, a Diagonal 1D Torus network including four compute nodes or a 4×4 Diagonal 2D Torus network may still be logically formed based on the foregoing example.

In a possible implementation, based on the foregoing technical solution of forming a logical network topology, when communication routing is configured for compute nodes of a plurality of tenants in a cloud scenario, if full connectivity has been implemented between the plurality of compute nodes, logical Diagonal Torus networks of different dimensions may be formed between the plurality of compute nodes, to find a shortest communication route between the compute nodes in the logical Diagonal Torus network, thereby determining a communication route for mutual communication between the plurality compute nodes. Therefore, by virtue of advantages of a short communication route and low communication latency in the Diagonal Torus network, another complex fully-connected network may be mapped to the Diagonal Torus network, to configure communication routing between a plurality of compute nodes. In this way, efficiency of configuring communication routing between nodes in a complex network is improved.

It should be noted that the "logical" Diagonal Torus network herein means that although a plurality of compute nodes have achieved full connectivity, the plurality of compute nodes are not directly formed, based on the network architecture provided in this embodiment of this application, into the Diagonal Torus network. Instead, based on the full connectivity between the plurality of compute nodes, a network architecture of the plurality of compute nodes is converted into a network architecture of the Diagonal Torus network, to find a shortest communication route.

In conclusion, when a network architecture includes at least one network device and a plurality of compute nodes, the plurality of compute nodes are communicatively connected according to a Torus networking scheme, and each compute node is further communicatively connected to at least one compute node with a farthest communication distance from the compute node under the Torus networking scheme. In this way, a degree of each compute node is increased, throughput and fault tolerance of the compute node are improved, communication performance between the compute nodes is improved, and communication latency between the compute nodes in an entire network is reduced. In addition, regardless of whether a plurality of compute nodes form one or more Torus networks, compute nodes that are farthest apart in communication distance in each Torus network may be fully connected through a network device, and a communication route between the compute nodes is short.

Based on the foregoing network architectures, embodiments of this application further provide several products including the foregoing network architectures, which are separately described below.

First, an embodiment of this application provides a circuit board. The circuit board includes a plurality of compute nodes, and the plurality of compute nodes form the network architectures shown in FIG. 2 to FIG. 9. That is, when the plurality of compute nodes are communicatively connected according to a Torus networking scheme, each compute node is further communicatively connected to a target compute node with a farthest communication distance from the compute node.

Each compute node may be a computing chip. After a plurality of computing chips are fully connected in a connection manner presented by the foregoing network architecture, the circuit board provided in this embodiment of this application is obtained.

In addition, an embodiment of this application provides a cabinet. The cabinet includes a plurality of compute nodes and at least one network device, and the plurality of compute nodes and the at least one network device form the network architectures shown in FIG. 10 to FIG. 12. That is, when the plurality of compute nodes are communicatively connected according to a Torus networking scheme, to form one or more Torus networks, each compute node is further communicatively connected, through the at least one network device, to a target compute node with a farthest communication distance from the compute node.

Each compute node may be used as one computer or one processor. After a plurality of computers or processors are fully connected through at least one network device in the connection manner presented by the foregoing network architecture, the cabinet provided in this embodiment of this application is obtained.

In addition, an embodiment of this application further provides a computing cluster. The computing cluster includes a plurality of cabinets, each cabinet includes a plurality of compute nodes and at least one network device, and the plurality of compute nodes and the at least one network device form the network architectures shown in FIG. 2 to FIG. 12.

In a possible implementation, the plurality of cabinets may be communicatively connected using a Clos architecture, thereby implementing full connectivity between compute nodes in the computing cluster.

It should be noted that, based on the network architectures provided in embodiments of this application and a technical concept of connecting a pair of compute nodes that are farthest apart in communication distance, as a quantity of compute nodes increases and a networking scale increases, the technical solution of this application is also applicable to other products such as a data center or a cloud data center. This is not limited in embodiments of this application.

Based on the foregoing network architectures, an embodiment of this application further provides a method for generating a network architecture. The method is applied to a manager, so that the manager forms, based on the foregoing network architectures, target network topologies of different topology types, and can flexibly switch between a plurality of network topologies supported by the network architectures. The manager is communicatively connected to a plurality of compute nodes and at least one network device that are in a network architecture. The manager may receive information or data input by a user, and process the information or data. In addition, in response to the information input by the user, the manager may further deliver instructions, configuration information, related data, and the like to the plurality of compute nodes and the at least one network device.

In this embodiment of this application, the manager is configured to: determine, based on a target topology type input by the user, routing information between compute nodes that form a target network topology in a network architecture, and send the target topology type and the routing information to the compute nodes, so that the compute nodes communicate based on the target network topology and the routing information.

In this way, when a network architecture is known, based on a user requirement, the manager may flexibly switch between target network topologies formed by a plurality of compute nodes in the network architecture, to find a shortest communication route between the compute nodes in a logical network, thereby reducing communication latency between the compute nodes in the network architecture, and improving flexibility of routing algorithm configuration.

The following first describes a computer device provided in this embodiment of this application. The computer device may be specifically a server, a terminal device, or the like. When the method for generating a network architecture in this embodiment of this application is implemented, the compute device may be a manager, may be a single network device, or may be any compute node, to correspondingly perform related steps in the method for generating a network architecture.

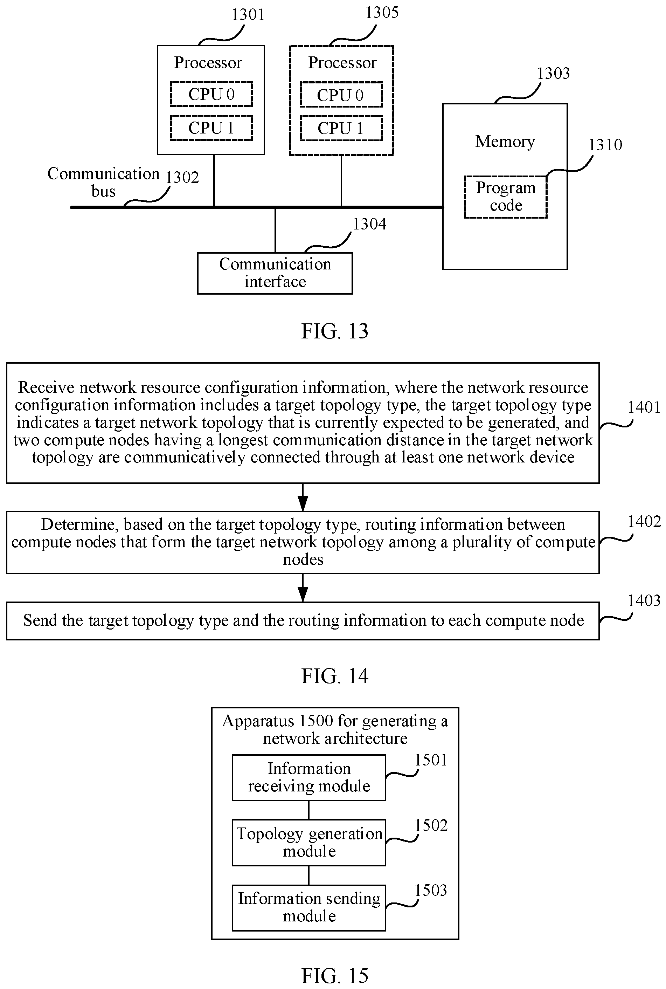

FIG. 13 is a diagram of a structure of a computer device according to an embodiment of this application. A computer device includes at least one processor 1301, a communication bus 1302, a memory 1303, and at least one communication interface 1304.

The processor 1301 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 1302 is configured to transmit information between the components. The communication bus 1302 may be classified into an address bus, a data bus, a control bus, and the like. For ease of representation, only one bold line is used to represent the bus in FIG. 13, but this does not mean that there is only one bus or only one type of bus.

The memory 1303 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or data structures and that can be accessed by a computer, but is not limited thereto. The memory 1303 may exist independently, and is connected to the processor 1301 through the communication bus 1302. Alternatively, the memory 1303 may be integrated with the processor 1301.

The communication interface 1304 is configured to communicate with another device or a communication network by using any transceiver-type apparatus. The communication interface 1304 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an example, the processor 1301 may include one or more CPUs, for example, a CPU 0 and a CPU 1 shown in FIG. 13.

In an example, the computer device may include a plurality of processors, for example, a processor 1301 and a processor 1305 shown in FIG. 13. Each of the processors may be a single-core processor, or may be a multi-core processor. The processor herein may be one or more devices, circuits, and/or processing cores configured to process data (for example, computer program instructions).

In some embodiments, the computer device may further include an output device and an input device (not shown in the figure). The output device communicates with the processor 1301, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1301, and may receive an input of a user in a plurality of manners. For example, the input device may be a mouse, a keyboard, a touchscreen device, or a sensing device.

In some embodiments, the memory 1303 is configured to store program code 1310 for executing the solutions of this application, and the processor 1301 may execute the program code 1310 stored in the memory 1303. The program code 1310 may include one or more software modules. The computer device may implement, by using the processor 1301 and the program code 1310 in the memory 1303, a method for switching a network architecture provided in the embodiment in FIG. 13.

FIG. 14 is a flowchart of a method for generating a network architecture according to an embodiment of this application. As described above, the network architecture includes a plurality of compute nodes and at least one network device, and the plurality of compute nodes are formed into at least one topologically identical Torus network according to a Torus networking scheme. The method includes the following steps.

Step 1401: Receive network resource configuration information, where the network resource configuration information includes a target topology type, the target topology type indicates a target network topology that is currently expected to be generated, and two compute nodes having a longest communication distance in the target network topology are communicatively connected through at least one network device.

In other words, the target network topology that is expected to be generated is the Diagonal Torus network provided in embodiments of this application.

As described above, the network architecture includes a plurality of compute nodes and at least one network device, and the plurality of compute nodes form one or more Torus networks. Therefore, when the network architecture includes one network device, and a plurality of compute nodes are formed into one Torus network according to a Torus networking scheme, if all compute nodes in one Torus network may be connected to the network device, the network device serves as a manager to perform step 1401 to step 1403. When the network device includes a plurality of network devices, and the plurality of compute nodes are formed into a plurality of topologically identical Torus networks according to a Torus networking scheme, compute nodes that are farthest apart in communication distance in the plurality of Torus networks may be communicatively connected through the network devices. In this case, step 1401 to step 1403 may be performed by a manager independent of the plurality of compute nodes and the plurality of network devices.

In some embodiments, when a plurality of compute nodes are formed into a plurality of topologically identical Torus networks according to the Torus networking scheme, and the network architecture includes a plurality of network devices, compute nodes at same positions in respective ones of the plurality of Torus networks are connected to a same network device. In this way, all compute nodes in the plurality of Torus networks may be fully connected through the plurality of network devices.

That is, when the network device includes a plurality of compute nodes and at least one network device, if compute nodes in one or more Torus networks are fully connected through the at least one network device, the one or more Torus networks and the at least one network device may logically form Diagonal Torus networks of a plurality of dimensions. In other words, the network architecture may be mapped to a plurality of network topologies based on a connection relationship between compute nodes in one or more Torus networks and the at least one network device.

Based on the network architectures shown in FIG. 10 to FIG. 12, the target network topology that is expected to be switched to in step 1401 may be any one of a Diagonal 1D Torus network, a Diagonal 2D Torus network, or a Diagonal 3D Torus network.

In a possible implementation, the network resource configuration information in step 1401 may further include a quantity of networks, and the quantity of networks indicates a quantity of target network topologies to be switched to. In this way, the manager performs, based on the network resource configuration information including the target topology type and the quantity of networks, the following step 1302, to determine routing information between compute nodes that form one or more target network topologies among a plurality of compute nodes.

In an example, in the network resource configuration information, the target network topology may be a Diagonal 2D Torus network, and the quantity of networks may be 5. The network resource configuration information indicates to generate, based on the network architecture, five Diagonal 2D Torus networks, but imposes no limitation on a quantity of compute nodes included in each Diagonal 2D Torus network.

In a possible implementation, the network resource configuration information may further include a target quantity of nodes of a target network topology to be generated, and a network scale of the target network topology that is expected to be generated is described through the target quantity of nodes. In this way, the manager performs, based on the network resource configuration information including the target topology type and the target quantity of nodes, the following step 1402, to determine, based on the target quantity of nodes, compute nodes that form the target network topology from the plurality of compute nodes included in the network architecture, and determine routing information between the compute nodes.

In an example, in the network resource configuration information, the target network topology may be a Diagonal 1D Torus network, and the target quantity of nodes may be 5. The network resource configuration information indicates to generate, based on the network architecture, a Diagonal 1D Torus network including five compute nodes, but imposes no limitation on a quantity of Diagonal 1D Torus networks to be formed.

Step 1402: Determine, based on the target topology type, routing information between compute nodes that form the target network topology among a plurality of compute nodes.

It should be noted that, based on the network architecture, routing between compute nodes includes routing information based on the Torus network and/or routing information based on the network device.

In an example, refer to FIG. 12. A communication route between a compute node with coordinate values of (0, 0) and a compute node with coordinate values of (1, 1) in a first 2D Torus network is from the compute node with coordinate values of (0, 0) to a compute node with coordinate values of (1, 0) to the compute node with coordinate values of (1, 1), or from the compute node with coordinate values of (0, 0) to a compute node with coordinate values of (0, 1) to the compute node with coordinate values of (1, 1). Therefore, routing information between the compute node with coordinate values of (0, 0) and the compute node with coordinate values of (1, 1) is routing information based on the Torus network. A communication route between the compute node with coordinate values of (0, 0) and a compute node with coordinate values of (2, 2) in the first 2D Torus network is from the compute node with coordinate values of (0, 0) to a first network device to the compute node with coordinate values of (2, 2). Therefore, routing information between the compute node with coordinate values of (0, 0) and the compute node with coordinate values of (2, 2) is routing information based on the network device. A communication route between the compute node with coordinate values of (0, 0) and a compute node with coordinate values of (2, 1) in the first 2D Torus network may be from the compute node with coordinate values of (0, 0) to the first network device to the compute node with coordinate values of (1, 1) to the compute node with coordinate values of (2, 1). Therefore, routing information between the compute node with coordinate values of (0, 0) and the compute node with coordinate values of (2, 1) is routing information based on the Torus network and the network device.

In some embodiments, when two compute nodes having a longest communication distance in a same Torus network are communicatively connected through a same network device, the routing information includes a shortest route between the compute nodes.

In a possible implementation, an implementation process of step 1402 may be: The manager determines, based on a connection relationship between compute nodes in the target network topology, routing information used when the compute nodes communicate with each other. For any compute node in the target network topology, routing information corresponding to the compute node includes a communication route between the compute node and all other compute nodes in the target network topology.

It should be noted that a prerequisite for performing step 1402 by the manager is that the plurality of compute nodes and the at least one network device included in the network architecture can form a network corresponding to the target topology type, that is, support switching to the target topology type. Therefore, if the target topology type is a network topology type supported for generation by the network architecture, the manager performs step 1402. If the target topology type is not a network topology type supported for generation by the network architecture, that is, the network architecture does not support generation of the target topology type, the manager does not perform step 1402, and a procedure of performing the method for switching a network architecture ends.

In a possible implementation, when the network architecture does not support generation of the target topology type, the manager may further output topology generation failure information, to inform a user that the network architecture does not support generation of the target topology type. Certainly, the topology generation failure information may further carry a network topology type currently supported for generation by the network architecture.

In some embodiments, an implementation process of determining a network topology type supported by the network architecture may be: The manager determines, based on a connection relationship between a plurality of compute nodes and at least one network device, the network topology type supported for generation by the network architecture.

That is, before performing the method for generating a network architecture provided in this embodiment of this application, the manager may obtain or receive a connection relationship between a plurality of compute nodes and at least one network device in the network architecture in advance, to determine a network topology type supported for generation by the network architecture. Certainly, the user may alternatively directly send, to the manager, the network topology type supported for generation by the network architecture. This is not limited in embodiments of this application.

In a possible implementation, after determining the network topology type supported for generation by the network architecture, the manager may store the network topology type supported for generation by the network architecture, to quickly determine, when receiving the network resource configuration information input by the user, whether the network architecture supports generation of the target topology type by comparing the target topology type with the network topology type supported for generation by the network architecture.

Step 1403: Send the target topology type and the routing information to each compute node.

Each compute node receives and stores the target topology type and the routing information, so that when networking needs to be performed based on the target network topology and a compute task needs to be processed, the compute node may communicate with at least one compute node in the target network topology with reference to the routing information, to perform transmission of related data, information, or instructions.

In conclusion, in this embodiment of this application, when the connection relationship between the plurality of compute nodes and the at least one network device in the network architecture supports generation of a plurality of network topology types, the manager determines, based on the target topology type included in the network resource configuration information, a communication route between the compute nodes that form the target network topology in the network architecture. In this way, based on a same network architecture, an application scenario of the network architecture is broadened by generating a target network topology, to meet requirements of different networking scales and requirements of different data processing tasks for a quantity of compute nodes. In addition, because the target network topology is a Diagonal Torus network constructed based on the networking scheme in this embodiment of this application, when the compute nodes communicate based on the target network topology and the routing information, communication latency during multi-node communication can be reduced.

FIG. 15 is a diagram of a structure of an apparatus for generating a network architecture according to an embodiment of this application. The network architecture includes a plurality of compute nodes and at least one network device. The plurality of compute nodes are formed into at least one topologically identical Torus network according to a Torus networking scheme. The apparatus for generating a network architecture may be implemented as a part or an entirety of a management device by using software, hardware, or a combination of software and hardware. Refer to FIG. 15. The apparatus 1500 for generating a network architecture includes an information receiving module 1501, a topology generation module 1502, and an information sending module 1503.

The information receiving module 1501 is configured to receive network resource configuration information, where the network resource configuration information includes a target topology type, the target topology type indicates a target network topology that is currently expected to be generated, and two compute nodes having a longest communication distance in the target network topology are communicatively connected through at least one network device. For a detailed implementation process, refer to corresponding content in the foregoing method embodiment. Details are not described herein again.

The topology generation module 1502 is configured to determine, based on the target topology type, routing information between compute nodes that form the target network topology among the plurality of compute nodes. For a detailed implementation process, refer to corresponding content in the foregoing method embodiment. Details are not described herein again.

The information sending module 1503 is configured to send the target topology type and the routing information to each compute node. For a detailed implementation process, refer to corresponding content in the foregoing method embodiment. Details are not described herein again.

In a possible implementation, when the plurality of compute nodes are formed into a plurality of topologically identical Torus networks according to the Torus networking scheme, and the network architecture includes a plurality of network devices, compute nodes at same positions in respective ones of the plurality of Torus networks are connected to a same network device.

In a possible implementation, two compute nodes having a longest communication distance in a same Torus network are communicatively connected through a same network device, and the routing information includes a shortest route between the compute nodes.

In a possible implementation, before determining, based on the target topology type, the routing information between the compute nodes that form the target network topology among the plurality of compute nodes, the apparatus further includes:
a topology judging module, configured to: if the target topology type is a network topology type supported for generation by the network architecture, perform the step of determining, based on the target topology type, the routing information between the compute nodes that form the target network topology among the plurality of compute nodes.

In a possible implementation, the apparatus further includes:
a topology determining module, configured to determine, based on a connection relationship between the plurality of compute nodes and the at least one network device, the network topology type supported for generation by the network architecture.

In this embodiment of this application, when the connection relationship between the plurality of compute nodes and the at least one network device in the network architecture supports generation of a plurality of network topology types, the apparatus for generating a network architecture determines, based on the target topology type included in the network resource configuration information, a communication route between the compute nodes that form the target network topology in the network architecture. In this way, based on a same network architecture, an application scenario of the network architecture is broadened by generating a target network topology, to meet requirements of different networking scales and requirements of different data processing tasks for a quantity of compute nodes. In addition, because the target network topology is a Diagonal Torus network constructed based on the networking scheme in this embodiment of this application, when the compute nodes communicate based on the target network topology and the routing information, communication latency during multi-node communication can be reduced.

It should be noted that, when the apparatus for generating a network architecture provided in the foregoing embodiment manages a Diagonal Torus network that can be logically generated by a plurality of Torus networks in a network architecture, division of the foregoing functional modules is merely used as an example for description. In actual application, the foregoing functions may be allocated to different functional modules for implementation as required, that is, an internal structure of the apparatus is divided into different functional modules, so as to implement all or some of the functions described above. In addition, the apparatus for generating a network architecture provided in the foregoing embodiment and the embodiment of the method for generating a network architectures pertain to a same concept. For a specific implementation process of the apparatuses, refer to the method embodiment. Details are not described herein again.

An embodiment of this application further provides a diagram of a structure of an apparatus for generating a network architecture. The network architecture includes a plurality of compute nodes and at least one network device. The plurality of compute nodes are formed into at least one topologically identical Torus network according to a Torus networking scheme. The apparatus for generating a network architecture may be implemented as some or all of compute nodes by using software, hardware, or a combination of software and hardware. The apparatus for generating a network architecture includes an information receiving module.

The information receiving module is configured to receive a target topology type and routing information, where the target topology type indicates a target network topology that is expected to be generated based on the network architecture, two compute nodes having a longest communication distance in the target network topology are communicatively connected through the at least one network device, and the routing information indicates a communication route between compute nodes that form the target network topology.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a compute device in a computer device cluster to perform the method for generating a network architecture provided in embodiments of this application.

An embodiment of this application further provides a computer program product including instructions. The computer program product may be software or a program product that includes the instructions and that can run on a compute device or be stored in any usable medium. When the computer program product runs on a compute device included in a compute device cluster, the compute device cluster is caused to perform the method for generating a network architecture provided in embodiments of this application.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing embodiments provided in this application are not intended to limit this application. Any modification, equivalent replacement, or improvement made without departing from the spirit and principle of this application shall fall within the protection scope of this application.

## Claims

1. A network architecture, wherein the network architecture comprises a plurality of compute nodes, the plurality of compute nodes are communicatively connected according to a Torus networking scheme, and a first compute node of the plurality of compute nodes is further communicatively connected to a target compute node; and
the first compute node is any one of the plurality of compute nodes, and the target compute node is a compute node with a farthest communication distance from the first compute node when the plurality of compute nodes are communicatively connected according to the Torus networking scheme.

2. The network architecture according to claim 1, wherein the Torus networking scheme comprises at least one dimension, and if a total quantity of compute nodes in each of the at least one dimension is an even number, the target compute node comprises one compute node, wherein a coordinate value of the compute node in a first dimension is a first coordinate value, and the first coordinate value is a value obtained by performing a modulo operation on (d₁ + k₁/2) with respect to k₁; and
the first dimension is any one of the at least one dimension, d₁ is a coordinate value of the first compute node in the first dimension, and k₁ is a total quantity of compute nodes in the first dimension.

3. The network architecture according to claim 1, wherein the Torus networking scheme comprises at least one dimension, and if there is a dimension in which a total quantity of compute nodes is an odd number among the at least one dimension, the target compute node comprises at least two compute nodes;
when a total quantity of compute nodes in a first dimension is an even number, coordinate values of the at least two compute nodes in the first dimension are each a first coordinate value, wherein the first coordinate value is a value obtained by performing a modulo operation on (d₁ + k₁/2) with respect to k₁; or when a total quantity of compute nodes in a first dimension is an odd number, a coordinate value of a first part of the at least two compute nodes in the first dimension is a second coordinate value, a coordinate value of a second part of the at least two compute nodes in the first dimension is a third coordinate value, and a quantity of compute nodes in the first part is equal to that in the second part, wherein the second coordinate value is a value obtained by performing a modulo operation on (d₁ + (k₁ - 1)/2) with respect to k₁, and the third coordinate value is a value obtained by performing a modulo operation on (d₁ + (k₁ + 1)/2) with respect to k₁; and
the first dimension is any one of the at least one dimension, d₁ is a coordinate value of the first compute node in the first dimension, and k₁ is the total quantity of compute nodes in the first dimension.

4. The network architecture according to claim 3, wherein if a total quantity of compute nodes in each of the at least one dimension is an odd number, the at least two compute nodes comprise a second compute node and a third compute node;
a coordinate value of the second compute node in the first dimension is the second coordinate value, and a coordinate value of the second compute node in a second dimension is a fourth coordinate value, wherein the fourth coordinate value is a value obtained by performing a modulo operation on (d₂ + (k₂ - 1)/2) with respect to k₂;
a coordinate value of the third compute node in the first dimension is the third coordinate value, and a coordinate value of the third compute node in the second dimension is a fifth coordinate value, wherein the fifth coordinate value is a value obtained by performing a modulo operation on (d₂ + (k₂ + 1)/2) with respect to k₂; and
the second dimension is any dimension among the at least one dimension other than the first dimension, d₂ is a coordinate value of the first compute node in the second dimension, and k₂ is a total quantity of compute nodes in the second dimension.

5. The network architecture according to any one of claims 1 to 4, wherein the network architecture further comprises at least one network device, and the first compute node is communicatively connected to the target compute node through the at least one network device.

6. The network architecture according to claim 5, wherein the first compute node is communicatively connected to the target compute node through a same network device.

7. The network architecture according to claim 5 or 6, wherein the plurality of compute nodes are formed into a plurality of topologically identical Torus networks according to the Torus networking scheme, and compute nodes at same positions in respective ones of the plurality of Torus networks are connected to a same network device.

8. A circuit, wherein the circuit comprises a plurality of compute nodes, and the plurality of compute nodes form the network architecture according to any one of claims 1 to 4.

9. A cabinet, wherein the cabinet comprises a plurality of compute nodes and at least one network device, and the plurality of compute nodes and the at least one network device form the network architecture according to any one of claims 1 to 7.

10. A computing cluster, wherein the computing cluster comprises a plurality of cabinets, each of the cabinets comprises a plurality of compute nodes and at least one network device, and the plurality of compute nodes and the at least one network device form the network architecture according to any one of claims 1 to 7.

11. A method for generating a network architecture, wherein the network architecture comprises a plurality of compute nodes and at least one network device, and the plurality of compute nodes are formed into at least one topologically identical Torus network according to a Torus networking scheme; and the method comprises:
receiving network resource configuration information, wherein the network resource configuration information comprises a target topology type, the target topology type indicates a target network topology that is currently expected to be generated, and two compute nodes having a longest communication distance in the target network topology are communicatively connected through the at least one network device;
determining, based on the target topology type, routing information between compute nodes that form the target network topology among the plurality of compute nodes; and
sending the target topology type and the routing information to the compute nodes.

12. The method according to claim 11, wherein when the plurality of compute nodes are formed into a plurality of topologically identical Torus networks according to the Torus networking scheme, and the network architecture comprises a plurality of network devices, compute nodes at same positions in respective ones of the plurality of Torus networks are connected to a same network device.

13. The method according to claim 11 or 12, wherein two compute nodes having a longest communication distance in a same Torus network are communicatively connected through a same network device, and the routing information comprises a shortest route between the compute nodes.

14. The method according to any one of claims 11 to 13, wherein before the determining, based on the target topology type, the routing information between the compute nodes that form the target network topology among the plurality of compute nodes, the method further comprises:
if the target topology type is a network topology type supported for generation by the network architecture, performing the step of determining, based on the target topology type, the routing information between the compute nodes that form the target network topology among the plurality of compute nodes.

15. The method according to claim 14, wherein the method further comprises:
determining, based on a connection relationship between the plurality of compute nodes and the at least one network device, the network topology type supported for generation by the network architecture.

16. A method for generating a network architecture, wherein the network architecture comprises a plurality of compute nodes and at least one network device, and the plurality of compute nodes are formed into at least one topologically identical Torus network according to a Torus networking scheme; and the method comprises:
receiving a target topology type and routing information, wherein the target topology type indicates a target network topology that is expected to be generated based on the network architecture, two compute nodes having a longest communication distance in the target network topology are communicatively connected through the at least one network device, and the routing information indicates a communication route between compute nodes that form the target network topology.

17. An electronic device, wherein the computer device comprises a processor and a memory;
the memory is configured to store a computer program; and
the processor is configured to execute the computer program to implement the method according to any one of claims 11 to 15, or the processor is configured to execute the computer program to implement the method according to claim 16.

18. A computer-readable storage medium, wherein the storage medium stores instructions, and when the instructions are run on the computer device, the computer device is caused to perform the method according to any one of claims 11 to 15, or the processor is configured to execute the computer program to implement the method according to claim 16.

19. A computer program product comprising instructions, wherein when the instructions are run on the computer device, the computer device is caused to perform the method according to any one of claims 11 to 15, or the processor is configured to execute the computer program to implement the method according to claim 16.
